**Europäisches Patentamt**

**European Patent Office**

**Office européen des brevets**

(11) Numéro de publication : **0 478 424 B1**

(12) **FASCICULE DE BREVET EUROPEEN**

(45) Date de publication du fascicule du brevet :
**30.11.94 Bulletin 94/48**

(51) Int. Cl.$^5$ : **G01S 1/02**

(21) Numéro de dépôt : **91402505.1**

(22) Date de dépôt : **20.09.91**

(54) **Procédé et dispositif de mesure de l'intégrité d'une émission.**

(30) Priorité : **26.09.90 FR 9011861**

(43) Date de publication de la demande :
**01.04.92 Bulletin 92/14**

(45) Mention de la délivrance du brevet :
**30.11.94 Bulletin 94/48**

(84) Etats contractants désignés :
**AT CH DE ES FR GB IT LI**

(56) Documents cités :
**EP-A- 0 170 231
US-A- 4 005 427
US-A- 4 068 236
US-A- 4 414 632
PROCEEDINGS OF THE ANNUAL RELIABI-
LITY AND MAINTAINABILITY SYMPO-
SIUM,Washington, 28-30 janvier 1975, pages
179-187, IEEE, New York, US; G.L.FILECCIA et
al.: "Mathematical modeling of monitoring
concepts"**

(73) Titulaire : **THOMSON-CSF
173, Boulevard Haussmann
F-75008 Paris (FR)**

(72) Inventeur : **Bécavin, Henri
THOMSON-CSF,
SCPI,
Cédex 67
F-92045 Paris la Défense (FR)**
Inventeur : **Louvard, Charles
THOMSON-CSF,
SCPI,
Cédex 67
F-92045 Paris la Défense (FR)**

(74) Mandataire : **Benoit, Monique et al
THOMSON-CSF
SCPI
B.P. 329
50, rue Jean-Pierre Timbaud
F-92402 Courbevoie Cédex (FR)**

EP 0 478 424 B1

## Description

L'invention se situe dans le domaine des procédés et dispositifs de mesure destinés à contrôler l'intégrité d'une émission en particulier l'intégrité de l'émission d'un signal émis par un radiophare.

On sait qu'un radiophare est un dispositif radio émettant sur une fréquence porteuse en général V.H.F. ou U.H.F. un ensemble de signaux. Ces signaux sont émis de telle sorte qu'un mobile disposant d'un récepteur approprié calé sur la fréquence de la porteuse peut, à l'aide de ce signal, déterminer la position angulaire de l'axe issu de l'émetteur sur lequel il se trouve. Les radiophares peuvent être omnidirectionnels ou directionnels. Parmi les radiophares omnidirectionnels on trouve le radiophare connu internationalement sous le nom de V.O.R. (V.H.F. omnirange) qui permet à un avion équipé de façon ad hoc de déterminer l'angle de l'axe issu du radiophare sur lequel il se trouve par rapport à la direction du nord magnétique au lieu du phare. Parmi les radiophares directionnels on trouve par exemple les dispositifs connus internationalement sous le nom d'I.L.S. (Instrument landing system - dispositif d'atterrissage aux instruments). Ces radiophares permettent de matérialiser dans l'espace un axe de descente vers une piste d'atterrissage. Les signaux émis par les radiophares sont en général émis par un réseau d'antennes, chaque antenne du réseau étant alimentée par un signal H.F. modulé d'une façon spécifique.

L'exactitude des informations de position que l'on peut tirer des radiophares est directement fonction de la capacité de ces équipements à émettre un signal restant à l'intérieur de normes déterminées. Dans le cas de radiophares tels que le V.O.R. ou l'I.L.S. ces normes sont définies par l'Organisation Internationale de l'Aviation Civile (O.A.C.I.). Ainsi par exemple le chapitre 3.1. du document dit "Annexe 10", édité par l'O.A.C.I., est consacré aux spécifications techniques de l'I.L.S.

"& 3.1. Le système I.L.S. comprend les éléments fondamentaux ci-après :

a) radiophare d'alignement de piste (dit Localizer)

b) radiophare d'alignement de descente (dit Glide-path)

c) radiobornes.

Le radiophare d'alignement de piste définit un plan vertical, lieu des points de DDM nulle, et contenant l'axe de piste.

Le radiophare d'alignement de descente définit une surface, lieu des points de DDM nulle, dont l'intersection avec le plan du Localizer définit la trajectoire de guidage.

Les radiobornes donnent des indications de position par rapport au seuil de piste.

Le sigle DDM désigne la différence entre les profondeurs de modulation de la porteuse par les deux tensions BF 90 Hz et 150 Hz. La DDM constitue le signal de guidage exploité par l'aéronef.

En dehors des performances proprement dites, les principales exigences portent sur les deux points suivants :

- continuité de service - Qualité liée à la rareté des interruptions du signal rayonné.

- intégrité de l'I.L.S. - Qualité liée à la confiance que l'on peut avoir dans l'exactitude des renseignements fournis par l'intallation."

Suivant les propres termes du document OACI, il est possible de dire que l'objectif essentiel d'une installation ILS est de réaliser et de maintenir :

"& 3.1.2.6. [...] le plus haut degré possible d'intégrité, de fiabilité, de stabilité de fonctionnement du système dans les conditions d'environnement les plus défavorables susceptibles d'être rencontrées. Le Supplément C à la 1ère partie contient des éléments indicatifs permettant de réaliser cet objectif [...] 2.8.2.13.En général, la conception de l'équipement de contrôle repose sur le principe d'un contrôle continu des signaux électromagnétiques rayonnés à des points spécifiques à l'intérieur du volume de couverture, ce contrôle devant permettre de s'assurer qu'ils sont conformes aux normes énoncées en 3.1.3.11. et 3.1.5.7".

Pour se conformer à ces directives le dispositif de contrôle de l'intégrité du signal du "glide path" comporte d'une part un capteur situé au voisinage du mât d'émission à une position représentative du signal émis sur l'axe de descente et d'autre part un dispositif constitué par des coupleurs mesurant les courants d'antennes et les recombinant de façon à reconstituer le signal théoriquement reçu dans deux autres directions. En ce qui concerne le VOR le dispositif comporte au moins un capteur situé à proximité du réseau d'antennes.

Les résultats des mesures effectuées à l'aide de ces dispositifs doivent rester à l'intérieur de fourchettes prédéterminées. L'inconvénient principal de ce mode de contrôle de l'intégrité est signalé par l'OACI toujours dans l'annexe 10 à propos de l'ILS.

"Bien que ce contrôle indique dans une certaine mesure que le signal électromagnétique partout ailleurs dans le volume de couverture se situe également dans les limites de tolérance, cette constatation est largement induite".

Il est donc indispensable de procéder périodiquement à des vérifications minutieuses en vol et au sol afin d'assurer l'intégrité du signal électromagnétique dans tout le volume de couverture.

En effet le champ au voisinage du récepteur de bord est perturbé par toutes les réflexions parasites en provenance de l'environnement proche ou lointain.

Ceci signifie que la valeur du champ en un point donné dépend de la valeur des champs rayonnés dans toutes les autres directions : toute modification des diagrammes d'antennes est susceptible de modifier le signal de guidage au point d'utilisation.

Il s'agit là du principal obstacle à la garantie de l'intégrité du signal dans l'espace, et de la principale insuffisance des dispositifs de contrôle actuels. Ceux-ci ne mesurent en réalité que des échantillons représentatifs du champ émis dans deux ou trois directions prédéterminées. Ces dispositifs, s'ils sont capables de prendre en compte globalement la plupart des paramètres, ne permettent ni d'évaluer avec précision leurs valeurs respectives, ni de déterminer le champ émis dans toutes les directions de l'espace.

Le but de l'invention est de remédier à cet inconvénient en fournissant un procédé et un dispositif à l'aide desquels il est possible de s'assurer en permanence que le signal reçu en un point de l'espace à l'intérieur du volume de couverture est conforme à la norme définie par l'OACI dans le cas des radiophares ou par le constructeur d'un émetteur dans le cas le plus général. Comme il n'est pas envisageable de disposer des capteurs dans tout l'espace le procédé selon l'invention repose essentiellement sur le calcul. Pour être à même d'effectuer ces calculs, il faut tout d'abord disposer d'un modèle mathématique fiable représentant les paramètres caractéristiques du signal reçu en un point en fonction des coordonnées de ce point. Il faut ensuite mesurer toutes les grandeurs nécessaires à la réalisation du calcul défini par le modèle. Or dans l'état actuel des connaissances les modèles que l'on envisage font appel à des grandeurs que l'on ne sait pas mesurer de façon permanente sans interrompre l'émission. De telles grandeurs sont par exemple les gains des antennes, variables en fonctions des conditions météorologiques, essentiellement la présence de givre sur les antennes ou les radômes, et dans certains cas les coefficients de réflexion du sol. Si l'on savait mesurer en permanence la valeur de ces grandeurs, on serait mieux à même de calculer en fonction de la valeur de ces paramètres mesurés à tout instant et d'autres grandeurs que l'on sait déjà mesurer, la valeur du signal en tout point intéressant du volume de couverture. L'emploi du procédé et du dispositif selon l'invention permet de s'assurer de la pertinence du modèle retenu, et donc de diminuer sensiblement les coûts d'exploitation tout en améliorant la qualité du service rendu. L'invention permet aussi dans certains cas l'aide du diagnostic de la cause d'un disfonctionnement.

A toutes ces fins l'invention a pour objet un procédé de contrôle permanent de l'intégrité d'une émission susceptible d'être affectée par des paramètres non directement accessibles à la mesure et dont on sait au moyen d'un modèle mathématique déterminer, l'influence sur le module et la phase du champ rayonné dans l'espace, l'émission étant réalisée à partir d'un réseau d'antennes, chaque antenne ou groupe d'antennes du réseau étant alimentée par une ou plusieurs fréquences porteuses haute fréquence (H.F.), chacune de ces fréquences étant modulées d'une façon connue par un ou plusieurs signaux basse fréquence sinusoïdaux purs caractérisé par les étapes suivantes :

1) on enregistre en au moins un point et pendant un temps T, la valeur de l'amplitude de la combinaison du signal reçu en ce point et d'un signal dit de référence dont la fréquence fondamentale est égale à l'une des hautes fréquences (H.F.) du signal à analyser ;

2) on extrait l'amplitude de composantes basses fréquences (B.F.) du signal ainsi obtenu et on les mémorise ;

3) on recommence n fois (n désignant un entier) les étapes 1 et 2 en enregistrant le signal au même point et en déphasant à chaque fois le signal de référence d'une quantité $\alpha_k = \dfrac{2\Pi}{n}$, k étant un entier prenant successivement toutes les valeurs entre 1 et n ;

4) on traite les n amplitudes ainsi mémorisées comme les n valeurs d'une fonction $F(\alpha_k)$ dont on extrait les valeurs d'amplitudes et d'arguments de certains termes de sa transformée de Fourier.

5) on recommence l'ensemble des opérations 1 à 4 au moins autant de fois qu'il y a de points de mesure ;

6) on détermine à partir desdites valeurs d'amplitudes et d'arguments les valeurs desdits paramètres non directement mesurables par utilisation dudit modèle mathématique.

Le point d'enregistrement pourra être soit à l'intérieur du radôme d'une antenne et dans ce cas le signal en ce point sera représentatif du signal émis par cette antenne, soit à l'extérieur et dans ce cas le signal en ce point sera représentatif du signal résultant de l'ensemble du réseau. Dans ce dernier cas le point sera situé de préférence à proximité du réseau.

Le temps T sera de préférence un nombre entier de périodes du signal B.F. à analyser.

Les valeurs des coefficients de la transformée de Fourier des fonctions de $\alpha_k$ peuvent être en particulier la composante continue ou la phase et l'amplitude de la composante à la périodicité $2\Pi$.

Les principes théoriques ayant conduit à l'utilisation du procédé ci-dessus décrit seront explicités ci-après à l'aide d'un exemple fictif choisi simple à dessein.

3

Considérons deux antennes A et B séparées d'une distance l. L'antenne A est alimentée par un signal de la forme :

$$a \cos (\omega t + \varphi_1) \cos \Omega_1 t$$

et l'antenne B par un signal de la forme :

$$b \cos (\omega t + \varphi_2) \cos \Omega_2 t$$

Dans cet exemple a et b représentent les modules des signaux, $\omega$ la pulsation de la porteuse, $\Omega_1$ et $\Omega_2$ les pulsations de modulation, $\varphi_1$ et $\varphi_2$ la phase de la porteuse sur chacune des antennes A et B à l'instant t = 0.

On admet qu'un capteur placé en un point quelconque de l'espace recevra un signal en provenance de ces deux antennes qui est une fonction connue d'éléments connus tels la distance du capteur à l'antenne et le coefficient d'absorbtion de l'atmosphère. La distance au capteur est considérée comme un invariant et l'absorbtion comme affaiblissant de la même façon les signaux émis par chacune des antennes. On admet par contre que les coefficients de transmission des antennes $T_A$ et $T_B$ seront variables de façon indépendante en fonction des conditions météorologiques (présence d'eau de neige ou de givre sur les radomes d'antenne).

Le modèle que nous avons choisit conduit donc à admettre qu'en un point de l'espace il sera reçu un signal de la forme :

$$T_A \, a \cos (\omega t + \varphi_a) \cos \Omega_1 t + T_B \, b \cos (\omega t + \varphi_b) \cos \Omega_2 t$$

Nous sommes donc bien dans les conditions requises pour appliquer le procédé. Nous avons un signal dont le module et la phase en un point sont susceptibles d'être affectés par deux paramètres $T_A$ et $T_B$ que l'on ne peut mesurer en permanence au cours de l'émission. On sait modéliser l'influence de ce paramètre sur les composantes du signal reçu.

La première étape du procédé va être d'enregistrer en un point situé à proximité du réseau d'antennes un signal qui est la somme du signal transmis en ce point par le réseau d'antennes et d'un signal dit de référence à la même fréquence que la porteuse. Lorsque l'on parle d'un point situé à proximité du réseau d'antennes, il s'agit d'un point qui est suffisamment proche pour que le signal capté en ce point puisse être ramené dans les installations concourant à l'émission (salle de contrôle par exemple) au moyen de guides ou de câbles coaxiaux tout en gardant une valeur suffisante pour les besoins de la mesure. Dans l'exemple fictif ici décrit nous admettons que le signal de référence est de la forme :

$$E = E_o \cos (\omega t + \varphi_o + \alpha_k)$$

Dans cette expression $\omega$ est la fréquence de la porteuse commune, $\varphi_o$ la phase pour t = 0 et $\alpha_k$ un déphasage qui prendra successivement toutes les valeurs comprises entre $\frac{2\Pi}{n}$ et $2\Pi$ par incrément de $\frac{2\Pi}{n}$. L'addition du signal de référence et du signal de réseau suppose que le signal de référence remplit certaines conditions :

- être suffisant pour introduire une variation significative du niveau moyen ;
- n'être ni trop faible, ni trop fort pour que le signal combiné ne soit jamais en état de surmodulation.

Ces conditions, sans être trop contraignantes, demandent cependant une séquence d'étalonnage destinée à déterminer la valeur optimale à mettre sur un atténuateur programmable en fonction du signal à analyser et éventuellement de la valeur de la phase.

Dans ces conditions le signal somme s'écrit

$$\vec{E}_O + \vec{E}_A + \vec{E}_B = a' \cos (\omega t + \varphi_a) \cos \Omega_1 t + b' \cos (\omega t + \varphi_b) \cos \Omega_2 t + E_o \cos (\omega t + \varphi_o + \alpha_k)$$

avec

$$a' = \|T_A \, a\|, \; b' = \|T_B \, b\|$$
$$\varphi_a = \varphi_1 + \arg T_A$$
$$\varphi_b = \varphi_2 + \arg T_B$$

On sait que si $z_1, z_2, z_3$ désigne trois nombres complexes la somme $z_1 \, z_2 \, z_3$ aura pour module $\| z_1 + z_2 + z_3 \|$ tel que :

$$\|z_1 + z_2 + z_3\|^2 = \|z_1\|^2 + \|z_2\|^2 + \|z_3\|^2 +$$

$$2 \, \|z_1\| \cdot \|z_2\| \cos \widehat{z_1 \, z_2} + 2 \, \|z_1\| \cdot \|z_3\| \cos \widehat{z_1 \, z_3} +$$

$$2 \, \|z_2\| \cdot \|z_3\| \cos \widehat{z_2 \, z_3}$$

Après détection l'expression du module du signal $\|S\|$ s'écrit :

$$\|S\|^2 = a'^2 \cos^2 \Omega_1 t + b'^2 \cos^2 \Omega_2 t + E_o^2$$
$$+ \; 2\, a'b' \cos \Omega_1 t \cos \Omega_2 t \cos (\varphi_a \; - \; \varphi_b)$$
$$+ \; 2\, a'E_o \cos \Omega_1 t \cos (\varphi_o \; + \; \alpha_k \; - \; \varphi_a)$$
$$+ \; 2\, b'E_o \cos \Omega_2 t \cos (\varphi_o \; + \; \alpha_k \; - \; \varphi_b)$$

Le signal somme $\|S\|$ ci-dessus est le signal de combinaison décrit à l'étape 1 du procédé. Pour réaliser l'étape 2 il faut encore filtrer le signal autour de fréquences BF qui apparaissent dans l'expression mathématique du signal de combinaison. Le choix de filtrage à retenir est limité par la forme de l'expression mathématique du signal obtenu après détection. Dans l'exemple simple que nous avons choisi les termes intéresssants pour l'emploi du procédé sont les termes qui sont des fonctions de $\alpha_k$. Ceci est également vrai dans le cas général. La forme mathématique de $\|S\|^2$ comporte en outre des termes en $\cos^2 \Omega_1 t \cos^2 \Omega_2 t$ qui peuvent s'analyser comme des signaux variant selon des pulsations $2\Omega_1$ ou $2\Omega_2$, des termes en $\cos \Omega_1 t \cos \Omega_2 t$ qui peuvent s'analyser comme une somme de signaux variant seront des pulsations $(\Omega_1 + \Omega_2)$ et $(\Omega_1 - \Omega_2)$ et enfin des termes en $\cos \Omega_1 t$ et $\cos \Omega_2 t$. Il est donc possible d'effectuer des filtrages centrés autour des pulsations 0, $2\Omega_1$, $2\Omega_2$, $(\Omega_1 + \Omega_2)$, $(\Omega_1 - \Omega_2)$, $\Omega_1 \, \Omega_2$.

Nous voyons donc sur cet exemple simple que les choix possibles sont des combinaisons linéaires simples de $\Omega_1$ et $\Omega_2$. Nous aurons l'occasion de le vérifier à nouveau sur d'autres exemples. Parmi les choix possibles on choisira de préférence ceux qui permettent d'accéder aux paramètres inconnus et ce, de façon simple. Dans l'exemple fictif que nous avons choisi si par exemple nous filtrons sur $\Omega_1$ nous obtenons en sortie de filtre un signal $S_A$ de la forme :

$$S_A \; \alpha \; a'E_o \cos \Omega_1 t \cos (\varphi_o \; + \; \alpha_k \; - \; \varphi_A).$$

Si nous enregistrons ce signal pendant un nombre entier de périodes nous serons capable d'extraire de cet enregistrement l'amplitude de $S_A$ qui vaut dans ce cas :

$$\left| S_A \right| \; \alpha \; a'E_o \cos (\varphi_o \; + \; \alpha_k \; - \; \varphi_A)$$

Dans ce cas le temps T dont il est question pour la deuxième étape du procédé est égal à un nombre entier de périodes du signal à la pulsation $\Omega_1$. Dans l'exemple choisi pour obtenir $T_B$ il faudra également filtrer sur $\Omega_2$ pendant un temps T correspondant à un nombre entier de périodes du signal à la pulsation $\Omega_2$.

Dans le cas le plus général où on filtre sur une combinaison linéaire des différentes pulsations de modulation, le temps T sera un multiple entier d'un temps $T_m$ égal au plus petit commun multiple PPCM des différentes périodes réelles intervenant dans la combinaison retenue. Nous disons réelles pour prendre en compte le fait que la période correspondant par exemple au signal à la pulsation $2\Omega_1$ est la moitié de celui correspondant à la période du signal à la pulsation $\Omega_1$. De même s'il apparaît dans la combinaison un terme à la pulsation $\Omega_1 + \Omega_2$ ou $\Omega_1 - \Omega_2$, la période réelle à prendre en compte pour ce terme est le PPCM des périodes correspondant à $\Omega_1$ et $\Omega_2$. Si l'on filtre en parallèle sur plusieurs combinaisons le temps $T_M$ sera au moins égal au plus long des temps déterminés comme indiqué ci-dessus, mais il faudra en sortie de chacun des filtres disposer des séquenceurs interrompant l'enregistrement au bout d'un temps T multiple entier du temps $T_m$ correspondant à la période de la combinaison filtrée. Si l'on filtre en série chacun des temps T successifs sera égal à un multiple entier de la période du signal filtré et le séquencement des enregistrements devra tenir compte de ces différents temps. Filtrer sur un nombre entier de périodes chacun des signaux est nécessaire pour avoir la meilleure précision possible sur la valeur de l'amplitude du signal filtré. Ce point sera expliqué plus en détail plus loin à propos d'un exemple particulier de réalisation. Nous avons vu plus haut que le signal en sortie du filtre centré sur la fréquence correspondant à la pulsation $\Omega_1$ était :

$$S_A \; \alpha \; a'E_o \cos (\varphi_o \; + \; \alpha_k \; - \; \varphi_A) \cos \Omega_1 t.$$

Le module de ce signal est égal à :

$$\left| S_A \right| \; \alpha \; a'E_o \cos (\varphi_o \; + \; \alpha_k \; - \; \varphi_a).$$

Cette extraction termine la deuxième étape du procédé ci-avant décrit.

Si maintenant nous recommencons la mesure n fois en incrémentant à chaque fois $\alpha_k$ d'une valeur $\dfrac{2\Pi}{n}$ réalisant ainsi la troisième étape du procédé nous sommes en mesure de représenter $S_A$ en fonction de $\alpha_k$.

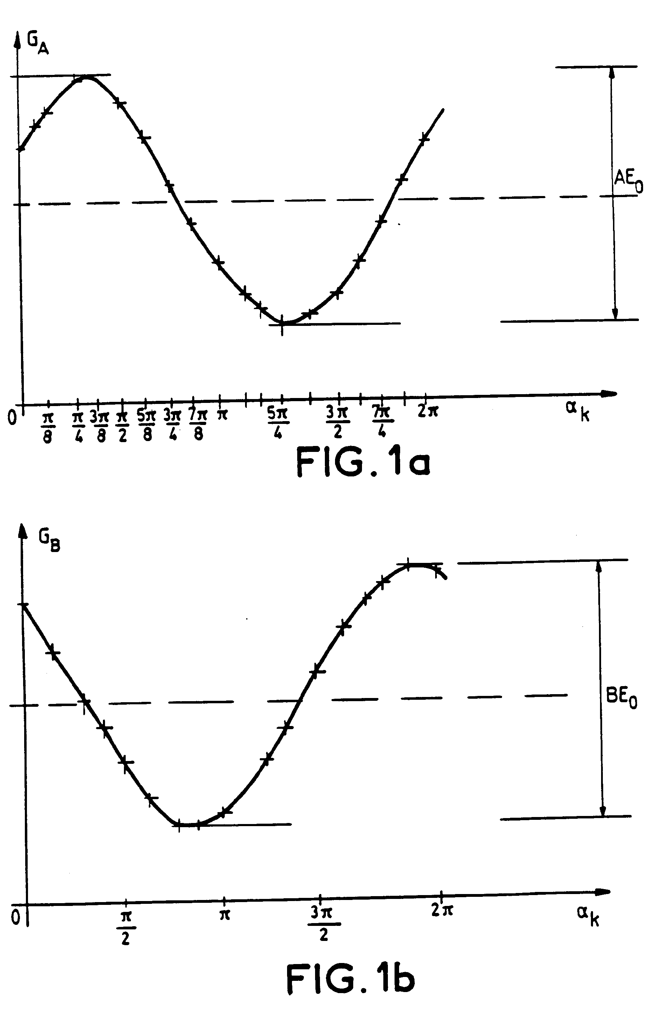

Ces variations sont représentées figure 1a lorsque $\alpha_k$ varie entre 0 et $2\Pi$ par pas de $\dfrac{2\Pi}{n}$, n étant dans l'exemple choisi égal à 16.

On notera que dans l'exemple simple choisi, la différence entre le maximum et le minimum de cette fonction est égale à $2a'E_o$ et que la phase de cette fonction est égale à $\varphi_o - \varphi_a$.

L'extraction de ces deux grandeurs constitue la quatrième étape du procédé ci-avant décrit.

Ces deux grandeurs sont la phase et l'amplitude du coefficient pour la périodicité $2\Pi$ de la transformée de Fourier de la fonction de $\alpha_k$.

Si maintenant nous faisons un filtrage sur une fréquence correspondant à la pulsation $\Omega_2$ la fonction ob-

tenue de la même manière lorsque $\alpha_k$ varie entre 0 et $2\Pi$ est représentée figure 1b. La différence entre le maximum et le minimum de cette fonction est égale à $2b'E_o$ et la phase de cette fonction est égale à $\varphi_o - \varphi_b$.

La connaissance de chacune des grandeurs $|S_A|$ et $|S_B|$ en fonction de $\alpha_k$ permet donc d'accéder en permanence au déphasage et à l'affaiblissement apporté par chacune des antennes A et B que nous avons appelé les gains. Il suffit de reprendre notre modèle mathématique et d'écrire :

$$a' = \frac{S_a}{E_o} = \|T_A a\|$$

$$b' = \frac{S_b}{E_o} = \|T_B b\|$$

$$\varphi_o - \varphi_a = \varphi_o - \varphi_1 - \arg T_a$$

$$\varphi_o - \varphi_b = \varphi_o - \varphi_2 - \arg T_b$$

pour réaliser la dernière étape du procédé. On note que toutes les phases et tensions sont mesurées par rapport à l'amplitude et à la phase du signal de référence. Les valeurs de a, b, $\varphi_1$, $\varphi_2$ seront obtenues en analysant par le même processus les signaux issus de capteurs au niveau de chacune des antennes A et B.

Le procédé est dit permanent en ce sens que d'une part il n'est pas nécessaire d'interrompre l'émission pour effectuer la mesure et que d'autre part la mesure peut être renouvelée en permanence par répétition du procédé.

L'invention est également relative à un dispositif pour effectuer la mesure de paramètres d'une émission non directement accessibles à la mesure dont on sait au moyen d'un modèle mathématique déterminer l'influence sur le module et la phase de l'émission en un point selon le procédé d'au moins une des revendications 1 à 25, l'émission étant réalisée à partir d'un réseau d'antennes, chaque antenne ou groupe d'antennes du réseau étant alimentée au moyen de un ou plusieurs émetteurs par une fréquence porteuse haute fréquence (HF) commune, cette fréquence étant pour chacune des antennes modulée par un ou plusieurs signaux sinusoïdaux basses fréquences (B.F.) purs caractérisé en ce que le dispositif comprend :

- au moins un capteur placé à proximité du réseau d'antenne ;
- un sommateur comportant deux entrées et une sortie et recevant sur l'une de ses entrées par l'intermédiaire d'un premier commutateur programmable haute fréquence (HF) permettant le raccordement successif de chacun des capteurs, l'un des signaux en provenance d'un capteur et sur l'autre entrée par l'intermédiaire d'un phaseur programmable un signal dit de référence capté par l'intermédiaire d'un coupleur en sortie de l'un des émetteurs concourant à l'émission, la sortie du sommateur étant raccordée à un détecteur ;
- un calculateur recevant le signal en sortie du détecteur et envoyant des signaux de commande en direction du phaseur et en direction du commutateur haute fréquence au moyen d'un bus et programmé pour effectuer au moins les étapes 4 à 6 selon la revendication 1.

Les cartes d'acquisition ou d'interface peuvent être nécessaires. Leur présence est fonction du calculateur employé et des niveaux nécessaires pour les entrées et sorties. La présence des coupleurs peut ne pas être nécessaire si le modèle mathématique n'exige pas la connaissance des courants d'antenne. Le dispositif ci-dessus décrit qui est apte à réaliser le procédé selon l'invention ne comporte pas de filtres, car le filtrage est réalisé de façon numérique par le calculateur. Il serait évidemment possible de placer en sortie du détecteur une série de filtres, chacun des filtres étant centré sur une fréquence qui est une combinaison linéaire de fréquences de modulation, un commutateur programmable dirigeant le signal en sortie de filtre vers la carte d'acquisition.

Dans certains cas une solution mixte avec filtrage numérique par exemple pour les basses fréquences faibles et filtrage analogique pour les basses fréquences élevées pourra être un bon compromis si la fréquence d'acquisition des échantillons permise par la carte d'acquisition n'est pas assez élevée.

De même il a été dit dans la description du procédé qu'il convenait que le signal de référence et le signal en provenance du capteur soient à des niveaux comparables. Si ce n'est pas le cas on peut placer un atténuateur programmable entre la sortie du commutateur de capteurs et l'entrée du sommateur, le choix de l'atténuation est déterminé par étalonnage préalable. L'atténuateur est commandé par le calculateur par l'intermédiaire de la carte interface en fonction du capteur commuté.

Le procédé et le dispositif selon l'invention seront maintenant illustrés en référence aux dessins annexés et à deux exemples de réalisation. Le premier exemple est relatif à la mesure de paramètres susceptible d'affecter le signal émis par un glide d'I.L.S. Le second qui sera décrit plus succintement est relatif à la mesure de paramètres susceptibles d'affecter l'émission d'un V.O.R Doppler.

Dans les dessins annexés :

- la figure 2 représente la forme générale du dispositif selon l'invention ;
- la figure 3 représente une variante du dispositif général selon l'invention (avec commutateur et filtre ana-

EP 0 478 424 B1

logique) ;
- la figure 4 représente une autre variante du dispositif général selon l'invention (avec atténuateur et interrupteur à diode) ;
- la figure 5 représente une autre variante du dispositif selon l'invention (avec plusieurs coupleurs d'introduction du signal de référence ;
- la figure 6 représente une autre variante du dispositif selon l'invention (avec un mélangeur en lieu et place d'un sommateur et d'un détecteur).

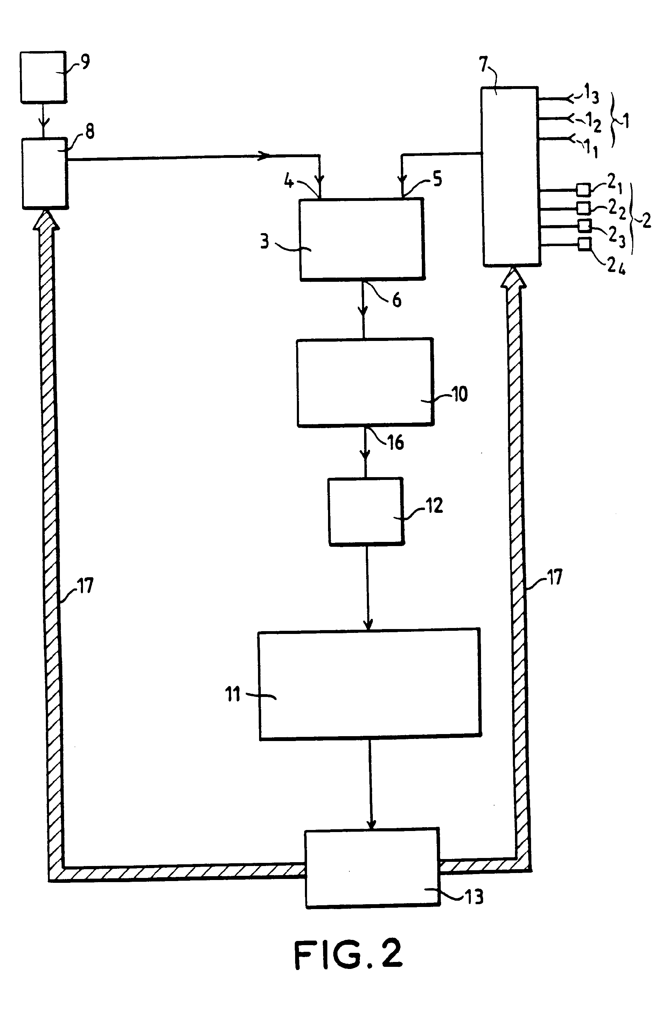

Sur la figure 2 représentant le dispositif selon l'invention on voit :
- des coupleurs 1 recevant des courants d'alimentation des antennes en sortie des émetteurs ;
- des capteurs 2 placés à proximité du réseau d'antenne ;
- un sommateur 3 comportant deux entrées 4, 5 et une sortie 6 et recevant sur l'une de ses entrées 5, par l'intermédiaire d'un commutateur programmable H.F. 7 permettant le raccordement successif de chacun des capteurs 2 et des coupleurs 1, le signal en provenance du capteur ou coupleur sélectionné, et sur l'autre entrée 4, par l'intermédiaire d'un phaseur programmable 8 un signal dit de référence, capté par l'intermédiaire d'un coupleur 9 en sortie de l'un des émetteurs concourant à l'émission, la sortie 6 du sommateur étant raccordée à un détecteur 10 ;
- un calculateur 11 recevant par l'intermédiaire d'une carte d'acquisition 12 le signal en sortie 16 du détecteur 10 et envoyant par l'intermédiaire d'une carte interface 13 des signaux de commande en direction du phaseur et en direction du commutateur haute fréquence 7. Les bus de transmission 17 des bits de commandes issus du calculateur sont représentés en grisé. De préférence le phaseur programmable 8 est un phaseur à $2^p$ positions.

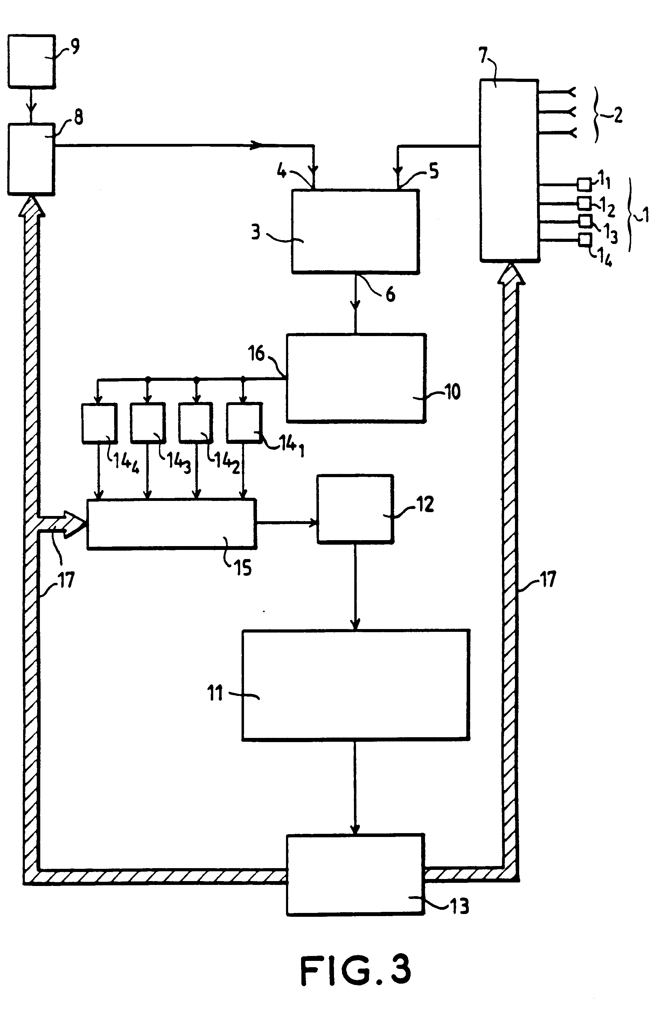

La figure 3 représente une variante du dispositif selon l'invention dans laquelle le filtrage en sortie du détecteur 10 est réalisé par une série de filtres analogiques 14, chaque filtre étant centré sur une fréquence qui dans le cas le plus général est une combinaison linéaire de différentes fréquences de modulation de la porteuse H.F. Dans ce cas la sortie 16 du détecteur est raccordée à la série de filtre 14 et un commutateur programmable 15, commandé par le calculateur 11 par l'intermédiaire de la carte interface d'adaptation de commande 13, sélectionne la sortie de filtre enregistrée. Cette fonction commutation peut être incluse dans la carte d'acquisition.

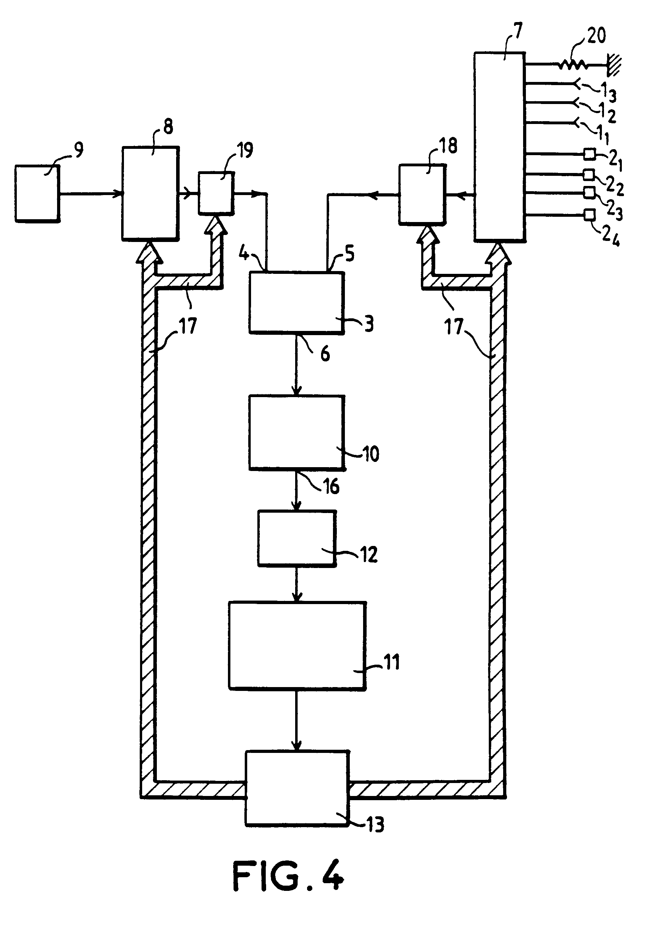

La figure 4 représente une autre variante de réalisation dans laquelle la sortie du commutateur 7 de signal d'entrée alimente un atténuateur programmable 18 dont la sortie est reliée à l'entrée 5 du sommateur 3. Un interrupteur à diode 19 commandé par le calculateur branché entre la sortie du phaseur 8 et l'entrée 4 du sommateur 3 permet d'interrompre l'arrivée du signal de référence. Le commutateur comporte une position permettant de sélectionner une charge 20.

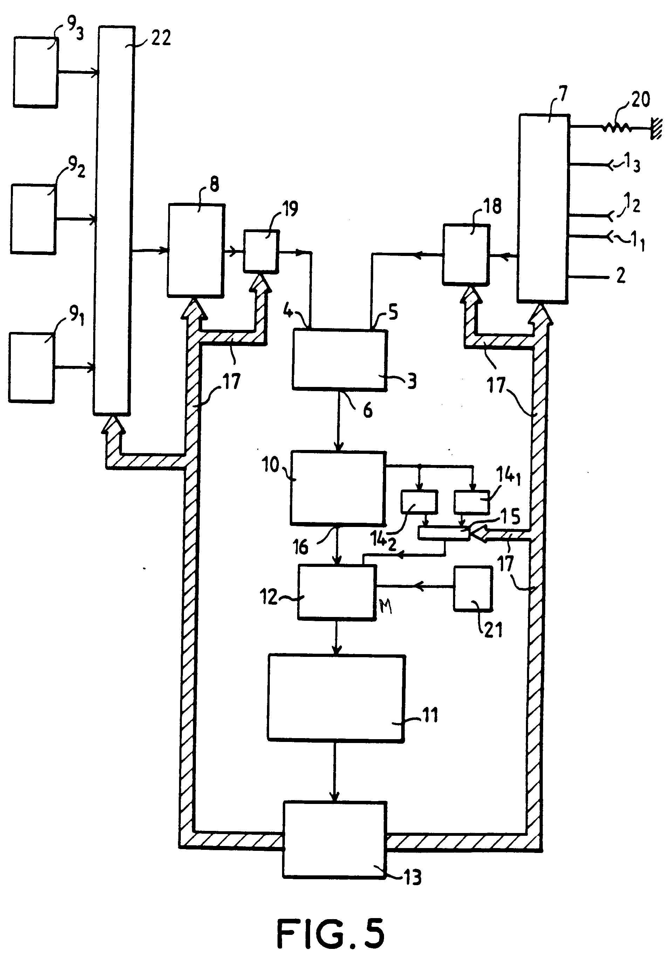

Le dispositif de la figure 5 diffère des dispositifs précédents en ce que le signal de référence peut être choisi par le calculateur 11. Il comporte à cet effet plusieurs coupleurs $9_1$ à $9_3$ (dans le cas de la figure 5). La sortie de chacun de ces coupleurs peut être sélectionnée par l'intermédiaire d'un commutateur HF programmable 22. Un dispositif de synchronisation 21 permet l'envoi de signaux de synchronisation vers la carte d'acquisition 12. La sortie du détecteur 10 alimente la carte d'acquisition 12 d'une part directement et d'autre part par l'intermédiaire de filtres 14-1 14-2 dont la sortie est commandée par un commutateur programmable 15.

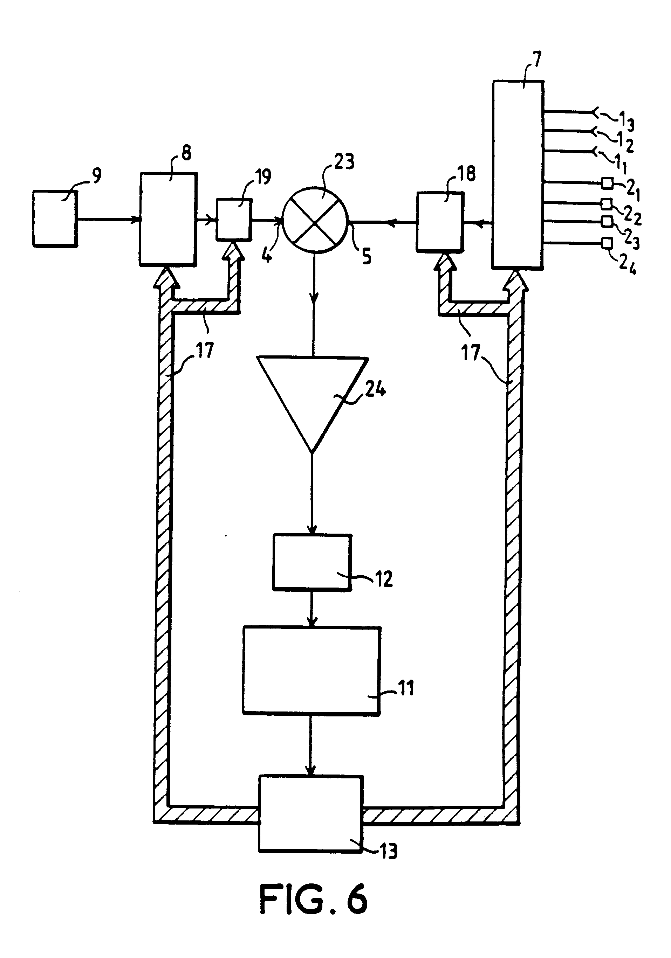

Le dispositif de la figure 6 représente le dispositif selon l'invention dans lequel le sommateur a été remplacé par un mélangeur 23 recevant le signal de référence et le signal en provenance du commutateur 7. La sortie du mélangeur alimente un circuit d'adaptation 24. La sortie du circuit 24 est raccordée à la carte d'acquisition 12.

Les montages représentés sur les figures 1 à 6 ne sont pas limitatifs de l'invention en particulier il est précisé que le nombre de coupleurs 9 peut être aussi grand que le nombre d'antennes du réseau. Un seul capteur 2, sans coupleur 1, peut permettre de réaliser le dispositif selon l'invention.

Le dispositif de la figure 4 a été utilisé pour contrôler l'intégrité de l'émission de l'émetteur glide path d'un ILS en utilisant le procédé selon l'invention. Cet exemple de réalisation sera maintenant décrit de façon détaillée.

On rappelle que le signal émis par un glide est une composition de trois signaux.
Un signal dit CSB de la forme :
$$CSB = P_1 [1 + m (\sin \Omega_1 t + \sin \Omega_2 t)] \cos (\omega t + \varphi_1)$$
Un signal dit SBO de la forme
$$SBO = B_1 (\sin \Omega_1 t - \sin \Omega_2 t) \cos (\omega t + \varphi_2)$$
Un signal dit "clearance" de la forme :
$$C = C_1 (1 + M_1 \sin \Omega_1 t + M_2 \sin \Omega_2 t) \cos [(\omega + \Delta)t + \varphi_3)$$
Dans ces expressions $\omega$, $\varphi_1$, $\varphi_2$, $\varphi_3$, sont respectivement la pulsation de la porteuse et les déphasages de

7

la porteuse à l'instant t = 0.

$\Omega_1$ et $\Omega_2$ sont deux pulsations de modulation,

$$\Omega_1 = 2\Pi \times 90 \text{ et } \Omega_2 = 2\Pi \times 150.$$

$P_1$ $B_1$ $C_1$ sont les amplitudes des signaux.

Le signal de guidage sur l'axe de descente est appelé DDM et sa valeur en un point a pour valeur :

$$DDM = \frac{B_1}{P_1} \cos(\varphi_2 - \varphi_1)$$

L'expression indique que le signal DDM est le produit scalaire des vecteurs représentant les champs CSB et SBO en ce point.

Le signal de clearance est sur une porteuse séparée de la porteuse DDM d'un écart $\Delta$ égal à 18 KHz. Dans ces conditions on peut considérer en première approximation que ce signal est séparé par filtrage des signaux CSB et SBO.

Le modèle mathématique retenu est constitué de la façon suivante :

les deux vecteurs CSB et SBO sont des fonctions complexes des courants d'alimentation des antennes du réseau d'émission, ainsi que des éléments extérieurs pouvant influer sur les champs électromagnétiques au niveau du récepteur de bord.

En particulier, le rayonnement réfléchi par le sol au voisinage immédiat des antennes joue un rôle essentiel. On peut le caractériser par un coefficient de réflexion complexe $\rho$ multipliant le champ rayonné par une antenne fictive, "image" de l'antenne réelle par le plan du sol.

Si $U$ représente le trajet direct entre l'antenne et le récepteur et $V$ le trajet en provenance de l'antenne "image", le facteur global affectant le rayonnement d'une antenne s'obtient en multipliant son courant d'alimentation par un terme :

$$E = U + \rho V$$

Si $Bi$ représente le courant d'alimentation SBO de la ième antenne, $Pi$ le courant CSB et Ti un coefficient représentatif de son état éventuel : présence de givre, d'eau etc ... on obtient pour les champs totaux :

$$CSB = \sum_i Ti \ Pi \ Ei \qquad\qquad SBO = \Sigma \ Ti \ Bi \ Ei$$

représentant les champs rayonnés au voisinage immédiat du réseau d'antennes, c'est-à-dire sans tenir compte d'éventuelles réflexions de l'émission sur des reliefs éloignés.

La somme porte sur toutes les antennes.

Ces expressions permettent de mieux évaluer l'influence des différents facteurs sur le signal dans l'espace.

Ces facteurs peuvent être classés en deux groupes principaux :
- facteurs internes :
  * courants d'alimentation CSB, SBO, et Clearance
- facteurs externes :
  * position géométrique des antennes réelles et images
  * coefficient de réflexion du sol
    (caractéristique de la géométrie et de la nature du sol sur une distance d'environ 500 mètres devant le réseau)
  * coefficient de transmission des antennes.

Dans le cas de l'émetteur glide de l'ILS le réseau est constitué de trois antennes placées sur un même mât vertical. Les courants d'antenne sont captés par trois coupleurs $1_1$ $1_2$ $1_3$ placés au niveau des sources antennes. les paramètres variables que l'on doit mesurer pour faire fonctionner le modèle mathématique sont donc les coefficients de transmission des antennes $T_i$ qui sont donc au nombre de trois et le coefficient de réflexion du sol $\rho$. Il a été admis que ce coefficient était le même pour chacune des trois antennes. Il y a donc au total quatre paramètres à mesurer. Pour la réalisation particulière à l'ILS il a été disposé quatre capteurs externes $2_1$ à $2_4$. Ces quatre capteurs ont été placés verticalement les uns au-dessus des autres au niveau d'un mât déjà existant sur lequel est monté le capteur faisant partie de l'installation de "monitoring" de l'ILS telle qu'elle est définie par l'OACI. le capteur existant fait partie du groupe des quatre capteurs $2_1$ à $2_4$.

Ce mât est situé à 85 m des antennes. Le signal est ramené au niveau de l'installation de mesure par quatre câbles coaxiaux.

Le signal de référence qui a été choisi et qui est introduit par l'intermédiaire du coupleur 9 au niveau du phaseur programmable 8 est le signal CSB. Il a pour expression :

$$P_{ref} = P_o \cos[\omega t + \alpha(k) + \varphi_o](1 + m(\sin\Omega_1 t + \sin\Omega_2 t)]$$

Le signal reçu au niveau de la sortie 16 du détecteur 10 est donc la somme de ce signal et du signal en provenance de l'un des quatre capteurs.

Le résultat de la détection va s'écrire comme étant la racine carrée de la somme des carrés des modules plus les doubles produits des modules et des phases respectives de chaque terme (Formule générale $D = V_1^2 + V_2^2 + 2V_1V_2\cos\delta\varphi$) On obtient :

$$D^2 = \left[P_o(1 + m\sin\Omega_1 t + m\sin\Omega_2 t)\right]^2$$

$$+ \left[P_1(1 + m\sin\Omega_1 t + m\sin\Omega_2 t)\right]^2$$

$$+ \left[B_1(\sin\Omega_1 t - \sin\Omega_2 t)\right]^2$$

$$+ 2P_1 P_o(1 + m\sin\Omega_1 t + m\sin\Omega_2 t)(1 + m\sin\Omega_1 t + m\sin\Omega_2 t)\cos[\varphi_1 - \alpha(k) - \varphi o]$$

$$+ 2P_o B_1(1 + m\sin\Omega_1 t + m\sin\Omega_2 t)(\sin\Omega_1 t - \sin\Omega_2 t)\cos[\varphi_2 - \alpha(k) - \varphi_o]$$

$$+ 2P_1 B_1(1 + m\sin\Omega_1 t + m\sin\Omega_2 t)(\sin\Omega_1 t - \sin\Omega_2 t)\cos(\varphi_1 - \varphi_2)$$

En développant cette expression et en ne conservant que les termes en $\Omega_1 t$ et $\Omega_2 t$, les autres termes étant éliminés par le filtrage sur $\Omega_1$ puis sur $\Omega_2$ on obtient :

$$D^2 = \left[P_o^2\, 2m + P_1^2\, 2m + 4m\, P_1 P_o \cos[\varphi_1 - \alpha(k) - \varphi_o]\right.$$

$$\left. + 2P_o B_1 \cos[\varphi_2 - \alpha(k) - \varphi_o] + 2P_1 B_1 \cos(\varphi_1 - \varphi_2)\right]\sin\Omega_1 t$$

$$+ \left[P_o^2\, 2m + P_1^2\, 2m + 4m\, P_1 P_o \cos[\varphi_1 - \alpha(k) - \varphi_o] - \right.$$

$$\left. 2P_o B_1 \cos[\varphi_2 - \alpha(k) - \varphi o] - 2P_1 B_1 \cos(\varphi_1 - \varphi_2)\right]\sin\Omega_2 t \quad + ...$$

Le filtrage va nous donner les modules des deux vecteurs V90 et V150 correspondant à $\Omega_1 t$ et $\Omega_2 t$.
Les expressions de la somme et de la différence sont donc :

$$V90 + V150 = 4m\, P_o^2 + 4m\, P_1^2 + 8m\, P_1 P_o \cos(\varphi_1 - \alpha k - \varphi o) = S_k$$

$$V90 - V150 = 4 P_o B_1 \cos(\varphi_2 - \alpha k - \varphi o) + 4 P_1 B_1 \cos(\varphi_1 - \varphi_2 = D_k$$

Avant de décrire la façon dont est effectué le filtrage numérique il convient d'expliciter comment est faite l'acquisition des données.

L'acquisition consiste à prendre un certain nombre, dans le cas présent, 540 échantillons à 0,185ms d'intervalle du signal issu du détecteur. Les opérations de conversion analogique/digital sont prises en charge par la carte d'acquisition 12 pilotée directement par un programme du calculateur 11. L'échantillonnage couvre 3 périodes complètes du signal ILS composite soit 100 ms (la fréquence du signal 90+150 Hz est de 30Hz).

Cette opération est renouvelée pour les 16 positions du phaseur.

On obtient ainsi une mesure complète concernant l'un des capteurs à analyser.

Les conditions de la mesure (valeur de l'atténuation, présence ou non du signal de référence) sont fixées par logiciel.

Le filtrage consiste à extraire à partir de ces 540 échantillons le module du signal correspondant à la pulsation $\Omega_1 = 2\pi$ x 90 et celui correspondant à la pulsation $\Omega_2 = 2\pi$ x 150. Considérons un tableau de 540 nombres complexes de module 1 et d'argument

$$\theta \; = \; 0{,}185 \times 90 \times 360° \times P$$

dans lequel

0,185 est la période d'échantillonnage ;

90 est la fréquence du signal que l'on cherche à filtrer ;

P est le rang de l'élément dans le tableau.

$\theta$ exprime donc en degrés le pas d'échantillonnage par rapport au 90Hz multiplié par le rang de l'échantillon.

Chaque élément peut s'exprimer par

$$e^{j\theta p}$$

Il faut également tenir compte du fait que le signal réellement analysé est limité dans le temps. De façon classique on utilise à cette fin une fenêtre dite "fenêtre de pondération".

La fenêtre utilisée ici est une fenêtre de Blackman.

Le calcul réellement effectué prend en compte la multiplication du signal par la fenêtre de pondération.

La moyenne sur une période du produit :

$$\text{fenêtre x signal x } e^{j\theta p}$$

représente le coefficient de la composante à 90 Hz recherché.

Le coefficient de la composante à 150 Hz est obtenu de façon analogue.

Connaissant chacun de ces modules on peut calculer le module de la somme soit S et le module de la différence soit D.

On recommence n fois l'opération en augmentant à chaque fois de $\dfrac{2\Pi}{n}$ le retard $\alpha_k$ introduit par le phaseur 8. Dans le cas de la réalisation n est égal à 16.

Lorsque $\alpha_k$ varie suivant les 16 valeurs du phaseur on obtient une variation périodique du module de S et D. Si l'on associe à chacune des 16 valeurs de modules trouvées respectivement pour S et D l'argument $\alpha_k$ correspondant à chacune des 16 valeurs du phaseur, on définit deux tableaux de 16 nombres complexes représentant chacun une fonction périodique de $\alpha_k$.

Le terme de rang 2 de la transformée de Fourier rapide (FFT) de chacune des deux fonctions ainsi définies sera conformément à l'expression mathématique de S et D définie plus haut un nombre complexe. Dans le cas de S, il aura pour module $8mP_1P_o$ et dans le cas de D $4P_oB_1$. Les arguments seront égaux respectivement à $(\varphi_1 - \varphi_o)$ et $(\varphi_2 - \varphi_o)$. Si l'on suppose $P_o$ et m constant il est possible d'obtenir à un coefficient multiplicateur près $P_1$ et $B_1$.

L'opération ci-dessus décrite sera répétée pour chacun des quatre capteurs $2_1$ à $2_4$. On dispose ainsi en quatre endroits différents de la valeur des vecteurs $P_1$ et $B_1$.

Pour atteindre les valeurs des coefficients $\rho$ $T_1$ $T_2$ et $T_3$ il nous faut maintenant disposer de la valeur de ces mêmes grandeurs au niveau des antennes elles-mêmes.

Pour cela l'opération d'acquisition sera recommencée au niveau de chacun des coupleurs d'antennes pour obtenir $P_i$ et $B_i$.

Si maintenant nous connaissons les facteurs de transmission (déphasage et affaiblissements) introduits par les trajets U et V nous serons à même d'écrire les équations :

$$P_1 \; = \; \sum_{i} \; T_i \; C_1 \; P_i \; (U_{i1} + \rho \, V_{i1})$$

$$B_1 \; = \; \sum_{i} \; T_i \; C_1 \; B_i \; (U_{i1} + \rho \, V_{i1})$$

pour le capteur $2_1$ et les mêmes équations pour chacun des trois autres capteurs.

Dans chacune de ces équations le coefficient $T_i$ représente le coefficient de transmission de l'antenne i. Les facteurs C sont des coefficients propre à chacun des capteurs soit $C_1$ $C_2$ $C_3$ $C_4$.

Si nous faisons le rapport $\dfrac{P_1}{B_1}$ nous obtenons l'équation :

$$\frac{P_1}{B_1} = \frac{\displaystyle\sum_i T_i P_i (U_{11} + \rho V_{11})}{\displaystyle\sum_i T_i B_i (u_{11} + \rho V_{11})} \quad (1)$$

Nous disposons alors d'un système de quatre équations comportant les quatre inconnues $\rho$ $T_1$ $T_2$ $T_3$.

Dans ces équations E et V ne dépendent que de la distance de chacune des antennes réelles ou image à chacun des capteurs.

Les positions des antennes et capteurs sont entrées dans une mémoire du calculateur en coordonnées cartésiennes x, y, z dans un tableau nommé DONNEES.GLD.

Le point 0 est défini par l'intersection :

- du plan de sol ;
- du plan vertical perpendiculaire à l'axe de piste et passant par le centre de la première antenne ;
- du plan vertical parallèle à l'axe de piste et passant par le centre de la première antenne.

Les positions des antennes images sont introduites par le calcul en tenant compte de la pente du sol par rapport à l'horizontale qui doit être mesurée. Les antennes images sont considérées comme symétriques des antennes réelles par rapport au sol réel.

On calcule ensuite la distance entre chacune des antennes réelles ou image et chacun des capteurs soit au total pour 3 antennes réelles $A_1$ $A_2$ $A_3$, 3 antennes images $A_4$ $A_5$ $A_5$ et 4 capteurs $2_1$ $2_2$ $2_3$ $2_4$, 24 distances $Y_{ij}$. i désigne l'indice de l'antenne et j l'indice du capteur. Si l'on désigne par $\theta_{ij}$ l'angle entre l'axe de l'antenne i et l'axe du capteur j l'expression du champ reçu au niveau du capteur j en provenance de l'antenne i est :

$$E_{ij} = E_i \frac{\cos^2 \theta_{ij}}{Y_{ij}}$$

L'expression du déphasage antenne capteur introduite par le temps de parcours de la distance $Y_{ij}$ est :

$$\varphi_{ij} = -\frac{2\Pi}{\lambda} Y_{ij}$$

Le mode de résolution des quatre équations sera maintenant abordé succintement.

Le facteur de transmission de l'antenne est écrit sous la forme :

$$T_i = T_i^n (1 + \zeta_i)$$

$T_i^n$ est le facteur de transmission mesuré en conditions nominales de fonctionnement, $\zeta_i$ en est la variation recherchée.

Avec les notations suivantes :

- $B_i$ et $P_i$ les courants SBO et CSB dans la i ème antenne
-

$$B_j^n = \sum B_i T_i^n E_{ij} \qquad \text{et} \qquad P_j^n = \sum P_i T_i^n E_{ij}$$

- $D_j^m$ le rapport SBO/CSB mesuré sur le j ème capteur, la détermination des $\zeta_i$ s'effectue à partir du système matriciel de J équations à I inconnues :

$$Y_j = W_{ji} \zeta_i$$

avec

$$Y_j = D_j^m P_j^n - B_j^n$$

et

$$W_{j1} = \left\{ B_1 - \mathbb{D}^{\mathbb{m}}_j \, P_1 \right\} \, T^{n}_{1} \, \mathbb{E}_{1j}$$

la matrice $W_{ji}$ est en général dégénérée (déterminant nul), et la résolution implique un processus d'approximation avec un certain choix de contraintes. Dans le cas actuel, compte tenu des conditions du problème, on choisit la minimisation de la fonctionnelle : $\| W - Y \| + \alpha \, \| \zeta \|$ où le paramètre de régularisation $\alpha$ minimise le résidu $\| W - Y \|$ suivant la norme quadratique (métrique de $L_2$).

Nous connaissons dans ces équations $\mathbb{D}^{\mathbb{m}}_j$ c'est le second membre de l'équation (1) écrite plus haut. Il nous faut connaître $\mathbb{B}^{n}_j$ $\mathbb{P}^{n}_j$ et $T^{n}_1$. Le calcul d'obtention de ces valeurs est décrit ci-après.

Ce calcul est fait à partir d'une phase d'étalonnage, chaque antenne étant successivement alimentée par un même signal de référence (CSB seul).

Considérons le coefficient $\tau_{ij}$ qui est le résultat de l'émission envoyée vers le capteur j par l'antenne i et l'antenne image i+3 de l'antenne i. Seule la connaissance en relatif de ces $\tau$ est nécessaire, ils sont donc directement des complexes dont les modules sont les amplitudes des porteuses recueillies sur les capteurs et les arguments les phases de ces mêmes porteuses.

Une acquisition préalable sur les coupleurs d'antennes va nous permettre de mesurer un facteur de couplage pour chacun de ces coupleurs, afin d'obtenir une détermination relative exacte en phase et en amplitude des courants d'alimentation des antennes.

On veut dire par là, qu'il existe un rapport complexe de couplage entre l'antenne et son coupleur. Connaissant le courant d'alimentation de l'antenne et le courant mesuré sur le coupleur on en déduit le coefficient de couplage. Ce coefficient est ensuite considéré comme une constante.

L'ensemble des coefficients complexes $\tau_{ij}$ constituent une matrice. Soit $F_1$ et $F_2$ deux nombres complexes, on peut écrire que :

$$\tau_{ij} = F_1 \, U_{ij} + F_2 \, V_{(i + 3)j}$$

Afin d'éliminer les incertitudes sur les phases relatives entre les capteurs nous allons traiter 4 groupes (dans le cas de quatre capteurs) de trois équations.

Le groupe d'équations correspondant au capteur j s'écrit :

$$\begin{vmatrix} \tau_{1j} \\ \tau_{2j} \\ \tau_{3j} \end{vmatrix} = \begin{vmatrix} U_{1j} & V_{4j} \\ U_{2j} & V_{5j} \\ U_{3j} & V_{6j} \end{vmatrix} \times \begin{vmatrix} F_{1j} \\ F_{2j} \end{vmatrix}$$

La résolution de ce système d'équations par régression multilinéaire selon les moindres carrés, nous permet de calculer les coefficients $F_1$ et $F_2$ et donc la valeur du coefficient $\dfrac{F_{2j}}{F_{1j}}$ qui est égal au coefficient de réflexion $\rho_j$ du sol. On considère que la moyenne des $\rho_j$ ainsi calculés constitue le coefficient de réflexion nominal moyen $\rho$ du sol.

A partir des $\tau_{ij}$ mesurés nous pouvons calculer les signaux théoriques reçus sur les capteurs.

Pour le signal CSB nous pouvons écrire :

$$CSB_j = \sum_{1}^{3} P_1 \, \tau_{ij}$$

et pour le signal SBO :

$$SBO_j = \sum_1^3 B_1 \tau_{1j}$$

Nous calculons ensuite le rapport :

$$\mathbb{D}_j^n = \frac{CSB_j}{SBO_j}$$

Pour atteindre les grandeurs qui nous intéressent nous allons exploiter par le calcul les écarts entre les signaux théoriques ainsi calculés et les signaux mesurés sur les capteurs soit $\mathbb{D}_j^m$.

Nous avons donc bien dans le cas de l'ILS appliqué le procédé selon l'invention. Nous avons créé un modèle mathématique qui, en fonction des courants d'alimentation des trois antennes du réseau de l'émetteur glide, nous permet de calculer le champs en un point dont on connaît les coordonnées. Ce champs dépend de quatre paramètres que nous ne savons mesurer directement.

Dans ce cas, avant de commencer la phase de mesure proprement dite il convient d'effectuer les phases d'étalonnage que nous venons de décrire.

Cette phase d'étalonnage est effectuée dans les conditions de calibration et permet de définir des conditions nominales de fonctionnement. Les mesures effectuées au cours de cette phase préalable utilisent le procédé selon l'invention.

L'étape 5 du procédé qui consiste à exécuter les opérations 1 à 4 un certain nombre de fois est ensuite exécuté.

Les étapes 2 à 5 du procédé selon l'invention sont exécutées une fois pour chacun des quatres capteurs situés à proximité du réseau d'antennes et une fois pour chacun des coupleurs d'antennes. Le signal de référence introduit au niveau du coupleur 9 est le signal CSB.

L'étape 6 est ensuite exécutée le calcul permettant de trouver les paramètres inconnus du modèle mathématique.

Dans ce qui précède nous avons négligé l'influence du signal de clearance sur les niveaux des signaux CSB et SBO.

Afin de connaître les caractéristiques du signal de clearance on peut recommencer l'ensemble des étapes 1 à 4 en prenant comme signal de référence le signal de clearance et en mesurant les courants d'antennes à l'aide des coupleurs $1_1$ et $1_3$ (l'antenne 2 ne reçoit pas de signal de clearance).

Ces résultats joints à ceux obtenus par l'emploi du procédé peuvent être utilisés pour calculer la valeur du signal ILS en des points de coordonnées connues.

Il est également possible de déterminer le lieu des points où le SBO a une valeur déterminée et en particulier la valeur O.

La comparaison de ce lieu avec l'axe de descente permet de contrôler les indications données par le réseau dans tout l'espace de couverture et non plus en quelques points seulement comme c'était le cas auparavant.

Le procédé général qui vient d'être décrit comporte des variantes de réalisation. Ainsi par exemple si l'on dispose de six capteurs extérieurs, il sera possible en répétant le processus d'acquisition défini par les étapes 1 à 4 pour les deux capteurs supplémentaires de définir des coefficients de réflexion du sol différents pour chacune des antennes d'émission.

Si par contre on ne dispose que d'un capteur extérieur, qui est le capteur existant on pourra définir un coefficient de réflexion du sol et admettre que les gains d'antenne sont à leur valeur nominale. Cette dernière configuration qui est la configuration la moins onéreuse pour le contrôle de l'intégrité de l'émission du glide d'un ILS en utilisant le procédé selon l'invention permet déjà une bonne amélioration par rapport au dispositif existant.

L'emploi du procédé et du dispositif pour le contrôle d'un radiophare VOR va maintenant être décrit.

Le signal émis par une station de radionavigation VOR comprend :

une première composante contenant l'information de l'azimut de référence (Nord Magnétique de la station) ;

une deuxième composante contenant l'information indicatrice de l'azimut $\theta$ du récepteur par rapport à l'azimut de référence ;

Le signal total peut s'écrire sous la forme d'une somme de trois vecteurs complexes modulant une fréquence porteuse de pulsation $\omega_o$ :

$$S = M_o + A_p e^{j\Omega_s t} = A_m e^{-j\Omega_s t}$$

Suivant le mode de réalisation, les vecteurs représentatifs s'écrivent (dans l'hypothèse idéale) :

dans le cas du VOR "conventionnel"

$$M_o = [1 + M \cos(\Omega_1 t + \eta \sin(\Omega_o t))] e^{j\varphi_o}$$

$$A_p = \frac{M}{2} e^{j\theta}$$

$$A_m = \frac{M}{2} e^{-j\theta}$$

$$\Omega_s = \Omega_o$$

dans le cas VOR Doppler

$$M_o = (1 + M \cos\Omega_o t) e^{j\varphi_o}$$

$$A_p = \frac{M}{2} e^{jm \sin(\Omega_o t - \theta)}$$

$$A_m = \frac{M}{2} e^{-j\eta \sin(\Omega_o t - \theta)}$$

$$\Omega_s = \Omega_1$$

Les valeurs numériques sont les suivantes :

$$\Omega_o = 2\pi\, 30 \text{ Hz}$$
$$\Omega_1 = 2\pi\, 9960 \text{ Hz}$$
$$M = 0,.3 \qquad \eta = 16$$

On constate facilement qu'au renversement près des signaux à phase variable et de référence, le signal total est identique pour les deux modes de réalisation.

Les conditions idéales de fonctionnements sont obtenues si :

a - les vecteurs *Ap* et *Am* sont complexes conjugués

b - leur somme est toujours en phase avec la porteuse $\omega_o$

c - la variation de phase en fonction de l'azimut est aussi proche que possible des valeurs idéales.

La réalisation dans le cas du VOR "conventionnel" comprend pour l'essentiel :

un émetteur à $\omega_o$ modulé $M_o$ alimentant une antenne omnidirectionnelle en amplitude et en phase,

un émetteur à $(\omega_o + \Omega_o)$ alimentant une antenne omnidirectionnelle en amplitude et dont la phase varie en azimut comme $\theta$,

un émetteur à $(\omega_o - \Omega_o)$ alimentant une deuxième antenne omnidirectionnelle en amplitude et dont la phase varie en azimut comme $-\theta$ ;

ces deux antennes sont en général constituées par une combinaison en quadrature de phase de deux antennes ayant des diagrammes de forme $\cos(\theta)$ et $\sin(\theta)$, soit :

$$\cos(\theta) + j \sin(\theta) \text{ et } \cos(\theta) - j \sin(\theta)$$

Dans le cas du VOR Doppler la réalisation comprend pour l'essentiel :

un émetteur à $\omega_o$ modulé par $M_o$ alimentant une antenne omnidirectionnelle en amplitude et en phase,

un émetteur à $(\omega_o + \Omega_1)$ alimentant cycliquement une série d'antennes omnidirectionnelles en amplitude et en phase et disposées sur un cercle de périmètre $\eta\,\lambda$ ($\lambda$ est la longueur d'onde du signal à $\omega$).

un émetteur à $(\omega_o - \Omega_1)$ alimentant cycliquement avec un décallage d'un demi-tour la même série d'antennes.

On voit que les performances du VOR dépendent d'un nombre très important de paramètres :

électroniques : stabilité en amplitude et en phase des émetteurs ;

antennes : stabilité des diagrammes et des champs rayonnés.

Toutes variations des paramètres modifie les valeurs des vecteurs $M_o$, $A_p$ et $A_m$, la mesure précise de ceux-ci permet de s'assurer en permanence des caractéristiques rayonnées.

Les principes de la mesure est le suivant.

On considère un signal de la forme :

$$M_a = Re^{j[(\omega_o + \Omega_a)t + \alpha_k]}$$

où $\Omega_a$ peut prendre les valeurs $0, \pm\Omega_o, \pm\Omega_1$, et $\alpha_k$ k valeurs équi- réparties entre 0 et $2\pi$. Il s'agit en pratique d'un signal prélevé à la sortie de chaque émetteur et passant à travers un phaseur possédant k positions de phase.

Ce signal est ajouté au signal reçu par un certain nombre de capteurs placés au voisinage des antennes, la détection du signal composite est donc le module du vecteur global, soit :

$$\|M_o + M_a + A_p e^{j\Omega_s t} + A_m e^{-j\Omega_s t}\|$$

avec s prenant les valeurs 0 ou 1 suivant qu'il s'agit d'un VOR conventionnel ou Doppler.

En ne retenant que les quantités ne contenant que $\Omega_a$ et $\alpha_k$, on obtient les termes suivants :

$$R\left[M_o{}^* \; e^{j(\Omega_a t \; + \; \alpha_k)} \; + \; M_o \; e^{-j(\Omega_a t \; + \; \alpha_k)}\right] \; +$$

$$R\left[A_p{}^* \; e^{j[(\Omega_a \; - \; \Omega_s)t \; + \; \alpha_k]} \; + \; A_p \; e^{-[j(\Omega_a \; - \; \Omega_s)t \; + \; \alpha_k]}\right] \; +$$

$$R\left[A_m{}^* \; e^{j[(\Omega_a \; + \; \Omega_s)t \; + \; \alpha_k]} \; + \; A_m \; e^{-j[(\Omega_a \; + \; \Omega_s)t \; + \; \alpha_k]}\right]$$

Un premier calcul de Fourier sur les n valeurs de la composante continue de la tension détectée va fournir une détermination des vecteurs :

$$M_o \text{ pour } \Omega_a \; = \; 0 \; ; A_p \text{ pour } \Omega_a \; = \; \Omega_s \text{ et } A_m \text{ pour } \Omega_a \; = \; - \; \Omega_s$$

Un second calcul des composantes de Fourier sur les n valeurs de la tension détectée à $\Omega_s$ pour $\Omega_a = 0$, c'est-à-dire du module du vecteur :

$$A_p{}^* \; (M_o \; + \; R \exp(j \, \alpha_k)) \; + \; A_m \, ( M_o{}^* \; + \; \exp \, (- j \, \alpha_k))$$

va donner le module et la phase de la combinaison de $A_p$ et $A_m$.

Les modalités de mesure et d'exécution de ces calculs sont explicités ci-après dans le cas du VOR Doppler.

Dans le cas du VOR Doppler le dispositif employé est celui de la figure 5.

La carte d'acquisition 12 comporte une entrée M de synchronisation extérieure, trois coupleurs $1_1$ $1_2$ $1_3$ permettent de capter le courant d'émission de chacun des émetteurs du VOR et un commutateur HF 22 permet de sélectionner l'un des coupleurs. On dispose d'un seul capteur 2. Le fonctionnement est le suivant le coupleur $9_1$ étant sélectionné par le commutateur 22 commandé par le calculateur 11, le signal à $\omega_o$ (correspondant à $\Omega_a = o$) en provenance de l'émetteur alimentant l'antenne omnidirectionnelle est introduit sur l'entrée 4 du sommateur 3. L'entrée 5 de ce sommateur est alimenté par le signal en provenance du capteur 2. Ce capteur est placé sur ce qu'on appelle le contrepoid du VOR à l'endroit où se trouve le capteur de "monitoring" actuel. le signal reçu par ce capteur est composé du signal émis par l'antenne omnidirectionnelle et du signal émis tour à tour par deux antennes diamétralement opposées émettant un signal non modulé à la pulsation $\omega_o + \Omega_1$ pour l'une et $\omega_o - \Omega_1$ pour l'autre. Il y a au total 48 antennes. Au cours d'un tour de $\dfrac{1}{30}$ s chaque antenne est alimentée deux fois à $\dfrac{1}{60}$ ème de seconde d'intervalle, une fois par un signal à la pulsation $\omega_o + \Omega_1$ et une fois par un signal à la pulsation $\omega_o - \Omega_1$. Un organe de synchronisation interne au VOR permet la commutation régulière des alimentations des paires d'antenne. Le dispositif 21 est un organe de capture d'une partie de ce signal de synchronisation.

Ce signal est utilisé par la carte d'acquisition pour déterminer l'instant d'acquisition d'un échantillon qui correspondra à l'instant où le signal émis par l'antenne qui émet est à son maximum. On obtient ainsi 48 échantillons par tour. Chacun des échantillons reçoit une affectation, il y a donc autant d'affectations que d'antennes équiréparties. On recommence cette opération n fois en ajoutant à chaque fois au signal de référence un déphasage de $\dfrac{2\Pi}{n}$. On a obtenu ainsi pour chaque antenne une affectation qui contient n valeurs correspondant à chacune des valeurs de $\alpha_k$. On recommence l'opération de la même façon en sélectionnant le coupleur 9.2 qui fournit un signal qui est le signal non modulé à la fréquence $\omega_o + \Omega_1$ puis en sélectionnant le coupleur 9.3 qui fournit un signal non modulé à la fréquence $\omega_o - \Omega_1$.

On obtient donc au total trois affectations par antennes chacune des affectations contenant n valeurs.

Nous allons pouvoir effectuer les premiers et seconds calculs définis plus haut.

Le calcul de Fourier sur la composante continue de la tension détectée sur les n valeurs de chacune des trois affectations correspondant à la première antenne respectivement pour $\Omega_a = O$, $\Omega_a = \Omega_1$ et $\Omega_a = - \Omega_1$ donneront les valeurs de $M_o$, $A_p$ et $A_m$.

Le calcul de Fourier sur la composante à $\Omega_1$ pour $\Omega_a = O$ sur les n valeurs tirées de la première affectation relative à cette antenne fournira pour cette antenne le module et la phase de la combinaison de $A_p$ et $A_m$.

La même série de deux calculs sur chacune des trois affectations des 47 autres antennes fournira les mêmes éléments pour chacune de ces antennes.

Les comparaisons des valeurs obtenues à des gabarits de tolérance permettront de vérifier l'intégrité du signal transmis par la station VOR. L'examen de l'ensemble des valeurs de $A_p$, $A_m$ et $M_o$ permettra dans certains cas de localiser un disfonctionnement au niveau de l'un des émetteurs, de une ou plusieurs antennes ou au niveau du réflecteur constitué par le contrepoids.

## Revendications

1. Procédé de contrôle permanent de l'intégrité d'une émission susceptible d'être affectée par des paramètres non directement accessibles à la mesure et dont on sait au moyen d'un modèle mathématique déterminer, l'influence sur le module et la phase du champ rayonné dans l'espace, l'émission étant réalisée à partir d'un réseau d'antennes, chaque antenne ou groupe d'antennes du réseau étant alimentée par une ou plusieurs fréquences porteuses haute fréquence (H.F.), chacune de ces fréquences étant modulées d'une façon connue par un ou plusieurs signaux sinusoïdaux basse fréquence purs caractérisé par les étapes suivantes :
   1) on enregistre en au moins un point et pendant un temps T, la valeur de l'amplitude de la combinaison du signal reçu en ce point et d'un signal dit de référence dont la fréquence fondamentale est égale à l'une des hautes fréquences (H.F.) du signal à analyser ;
   2) on extrait l'amplitude des composantes basses fréquences (B.F.) du signal ainsi obtenu et on les mémorise ;
   3) on recommence n fois (n désignant un entier) les étapes 1 et 2 en enregistrant le signal au même point et en déphasant à chaque fois le signal de référence d'une quantité $\alpha_k = \dfrac{2\Pi}{n}$, k étant un entier prenant successivement toutes les valeurs entre 1 et n ;
   4) on traite les n amplitudes ainsi mémorisées comme les n valeurs d'une fonction $F(\alpha_k)$ dont on extrait les valeurs d'amplitudes et d'arguments de certains termes de sa transformée de Fourier.
   5) on recommence l'ensemble des opérations 1 à 4 au moins autant de fois qu'il y a de points de mesure ;
   6) on détermine à partir desdites valeurs d'amplitudes et d'arguments les valeurs desdits paramètres non directement mesurables par utilisation dudit modèle mathématique.

2. Procédé selon la revendication 1, caractérisé en ce que au moins un des points d'enregistrement se situe à l'intérieur du radôme d'une antenne, le signal enregistré étant représentatif du courant d'alimentation de cette antenne.

3. Procédé selon la revendication 1, caractérisé en ce que au moins un des points d'enregistrement se situe à proximité du réseau d'antenne.

4. Procédé selon la revendication 1, caractérisé en ce que le temps T d'enregistrement est égal à un nombre entier de périodes du signal à analyser.

5. Procédé selon la revendication 1, caractérisé en ce que les coefficients de la transformée de Fourier de la fonction $(\alpha_k)$ comportent au moins l'un des coefficients suivants :
   - valeur de la composante continue ;
   - amplitude et phase de la fréquence fondamentale.

6. Procédé selon la revendication 1, caractérisé en ce que les étapes 1 à 4 sont effectuées avec des signaux de référence différents.

7. Procédé selon la revendication 1 et destiné à contrôler l'intégrité du signal émis par l'émetteur "Glide path" d'un système ILS lequel comporte un réseau constitué de trois antennes, $A_1$ $A_2$ $A_3$ émettant un signal dit CSB, un signal dit SBO et un signal dit clearance, caractérisé en ce que les étapes 1 à 4 sont effectuées en plaçant le point d'enregistrement à l'intérieur de l'une des antennes puis successivement à l'intérieur de chacune des deux autres.

8. Procédé selon la revendication 7, caractérisé en ce que les étapes 1 à 4 sont effectuées en outre en plaçant au moins une fois le point d'enregistrement à proximité du réseau d'antennes.

9. Procédé selon la revendication 8, caractérisé en ce que les étapes 2 à 5 sont effectuées en plaçant le point d'enregistrement à proximité du réseau d'antennes successivement en quatre endroits différents.

**10.** Procédé selon la revendication 8, caractérisé en ce que les étapes 1 à 4 sont effectuées en plaçant le point d'enregistrement à proximité du réseau d'antennes en six endroits différents.

**11.** Procédé selon la revendication 8, caractérisé en ce que le signal de référence est le signal dit CSB prélevé au niveau d'un émetteur alimentant le réseau d'antennes.

**12.** Procédé selon la revendication 7, caractérisé en ce que le temps T d'enregistrement est de 100 millisecondes.

**13.** Procédé selon la revendication 7, caractérisé en ce que le filtrage défini à l'étape deux est effectué sur la fréquence de 90 Hz.

**14.** Procédé selon la revendication 13, caractérisé en ce que le filtrage est effectué en outre sur la fréquence de 150 Hz.

**15.** Procédé selon la revendication 7, caractérisé en ce que le nombre n défini à l'étape 3 est égal à 16.

**16.** Procédé selon les revendications 7 à 9 et 11 à 15, caractérisé en ce qu'on crée deux fonctions $S(\alpha_k)$ et $D(\alpha_k)$ dont les 16 valeurs sont respectivement la somme et la différence des valeurs obtenues pour chacune des valeurs de $\alpha_k$ en filtrant à 90 Hz et 150 Hz et que les coefficients extraits de la transformée de Fourier de chacune de ces deux fonctions sont l'amplitude et la phase de la composante à la périodicité $2\Pi$.

**17.** Procédé selon la revendication 16, caractérisé en ce que les étapes 1 à 4 sont effectuées en outre en prenant le signal de clearance pour signal de référence le point d'enregistrement étant placé successivement au niveau des antennes $A_1$ et $A_3$.

**18.** Procédé selon la revendication 1 et destiné à contrôler l'intégrité du signal émis par une station VOR Doppler lequel comporte un réseau d'antennes constitué d'une antenne centrale et de 48 antennes équiréparties sur un cercle ayant pour centre l'antenne centrale, l'antenne centrale étant alimentée par un émetteur produisant une fréquence porteuse de pulsation $\omega_o$ modulée en amplitude par un signal de pulsation $\Omega_o$, les antennes équiréparties étant alimentées successivement par paire tous les $\frac{1}{60}$ ème de seconde, les deux antennes constituant la paire étant diamétralement opposées l'une des antennes étant alimentée par un émetteur produisant une haute fréquence (HF) pure de pulsation $\omega_o + \Omega_1$ et l'autre par un émetteur produisant une haute fréquence (HF) pure de pulsation $\omega_o - \Omega_1$, caractérisé en ce que le point d'enregistrement est situé à proximité du réseau d'antenne.

**19.** Procédé selon la revendication 18, caractérisé en ce que le temps T d'enregistrement est de n/30ème de seconde.

**20.** Procédé selon la revendication 18, caractérisé en ce que les valeurs enregistrées au cours d'une des périodes T sont réparties en 48 affectations, les changements d'affectation étant synchronisés avec les changements d'alimentation des paires d'antennes équiréparties.

**21.** Procédé selon la revendication 18, caractérisé en ce que le nombre n défini à l'étape 3 est de 16.

**22.** Procédé selon la revendication 18, caractérisé en ce que les étapes 1 à 4 sont effectuées au moins une fois avec chacun des signaux produits par les trois émetteurs comme signal de référence.

**23.** Procédé selon la revendication 22, caractérisé en ce que le filtrage défini à l'étape 2 est effectué sur la composante continue et la composante $\Omega_1$.

**24.** Procédé selon la revendication 23, caractérisé en ce que les coefficients extraits de la transformée de Fourier de $\alpha_k$ comportent au moins :
   - la composante continue ;
   - la composante à la fondamentale $\Omega_1$.

**25.** Procédé selon les revendications 18, 19, 20, 21, 23 et 24, caractérisé en ce qu'on crée pour chacune des 48 antennes de la périphérie 3 affectations, chacune des affectations contenant les n valeurs enregistrées avec chacun des signaux de référence et qu'on extrait de l'affectation réalisée avec le signal de référence à la pulsation $\omega_o$ la composante continue et la composante à la fréquence fondamentale de la transformée de Fourier de la fonction de $\alpha_k$ et qu'on extrait de chacune des deux autres affectations la composante continue de la transformée de Fourier de la fonction de $\alpha_k$.

26. Dispositif pour effectuer la mesure de paramètres d'une émission non directement accessibles à la mesure dont on sait au moyen d'un modèle mathématique déterminer l'influence sur le module et la phase de l'émission en un point selon le procédé d'au moins une des revendications 1 à 25, l'émission étant réalisée à partir d'un réseau d'antennes, chaque antenne ou groupe d'antennes du réseau étant alimentée au moyen de un ou plusieurs émetteurs par une fréquence porteuse haute fréquence (HF) commune, cette fréquence étant pour chacune des antennes modulée par un ou plusieurs signaux sinusoïdaux basses fréquences (BF) purs caractérisé en ce que le dispositif comprend :
    - au moins un capteur (2) placé à proximité du réseau d'antenne ;
    - un sommateur (3) comportant deux entrées (4, 5) et une sortie (6) et recevant sur l'une de ses entrées (5) par l'intermédiaire d'un premier commutateur programmable haute fréquence (HF) (7) permettant le raccordement successif de chacun des capteurs (2),l'un des signaux en provenance d'un capteur et sur l'autre entrée (4) par l'intermédiaire d'un phaseur programmable (8) un signal dit de référence capté par l'intermédiaire d'un coupleur (9) en sortie de l'un des émetteurs concourant à l'émission, la sortie du sommateur étant raccordée à un détecteur (10) ;
    - un calculateur (11) recevant le signal en sortie (16) du détecteur (10) et envoyant des signaux de commande en direction du phaseur et en direction du commutateur haute fréquence au moyen d'un bus (17), et programmé pour effectuer au moins les étapes 4 à 6 selon la revendication 1.

27. Dispositif selon la revendication 26, caractérisé en ce que la sortie (16) du détecteur (10) est appliqué à l'entrée d'une pluralité de filtres analogiques (14) la sortie de chacun des filtres (14) alimentant un second commutateur programmable (15) dont la sortie alimente la carte d'acquisition (12).

28. Dispositif selon la revendication 26, caractérisé en ce que un atténuateur programmable (18) est branché entre la sortie du premier commutateur (7) et l'entrée du sommateur (3).

29. Dispositif selon la revendication 28, caractérisé en ce que un interrupteur à diode (19) est inséré entre la sortie du phaseur (8) et l'entrée (4) du sommateur (3).

30. Dispositif selon la revendication 29, caractérisé en ce que l'entrée du commutateur (7) est raccordée en outre à trois coupleurs ($1_1$, $1_2$, $1_3$) et une charge (20)

31. Dispositif selon la revendication 30, caractérisé en ce qu'il comporte un troisième commutateur programmable (22) dont la sortie est raccordée à l'entrée du phaseur (8 ) et dont les entrées sont raccordées à au moins deux coupleurs ($9_1$, $9_2$)..

32. Dispositif selon les revendications 27 et 31, caractérisé en ce que la carte d'acquisition (12) est alimentée par un organe (21) de synchronisation.

33. Dispositif selon l'une des revendications 26 à 32, caractérisé en ce que le sommateur (3) et le détecteur (10) sont remplacés par un mélangeur (23) recevant sur l'une de ses entrée (5) le signal en sortie de l'atténuateur (18) et sur l'autre entrée (4) le signal en sortie du phaseur (8), et un circuit d'adaptation (24) recevant en entrée le signal en provenance du mélangeur (23) et alimentant en sortie la carte d'acquisition (12).

## Patentansprüche

1. Verfahren zur permanenten Kontrolle der Integrität einer Sendung, die durch nicht direkt der Messung zugängliche Parameter beeinflußt werden kann und deren Einfluß auf den Betrag und die Phase des in den Raum abgestrahlten Feldes mittels eines mathematischen Modells bestimmt werden kann, wobei die Sendung ausgehend von einer Antennenanordnung realisiert wird, wobei jede Antenne oder Antennengruppe der Anordnung durch eine oder mehrere Hochfrequenzträgerfrequenzen (HF) gespeist wird, wobei jede dieser Frequenzen auf bekannte Weise durch ein oder mehrere reine sinusförmige Niederfrequenzsignale moduliert wird, gekennzeichnet durch die folgenden Schritte:

1) Man zeichnet an wenigstens einem Punkt und während einer Zeit T den Wert der Amplitude der Kombination aus dem an diesem Punkt empfangenen Signal und einem sogenannten Referenzsignal auf, dessen Grundfrequenz gleich einer der Hochfrequenzen (HF) des zu analysierenden Signals ist;

2) man extrahiert die Amplitude der Niederfrequenzkomponenten (BH) des so erhaltenen Signals und speichert sie;

3) man wiederholt n-mal (dabei bezeichnet n eine ganze Zahl) die Schritte 1 und 2, indem das Signal am gleichen Punkt aufgezeichnet und jedesmal das Referenzsignal um eine Größe $\alpha_k = 2\pi/n$ phasenverschoben wird, wobei k eine ganze Zahl ist, die nacheinander alle Werte zwischen 1 und n annimmt;

4) man behandelt die so gespeicherten n Amplituden wie die n Werte einer Funktion $F(\alpha_k)$, woraus man die Werte von Amplituden und Argumenten bestimmter Terme ihrer Fouriertransformierten extrahiert;

5) man beginnt erneut alle Operationen 1 bis 4 wenigstens soviele Male, wie Meßpunkte vorhanden sind;

6) man bestimmt aus den Werten von Amplituden und Argumenten die Werte der nicht direkt meßbaren Parameter durch die Verwendung des mathematischen Modells.

2. Verfahren nach Anspruch 1, dadurch gekennzeichnet, daß wenigstens einer der Aufzeichnungspunkte im Inneren des Radoms einer Antenne liegt, wobei das aufgezeichnete Signal für den Speisestrom dieser Antenne steht.

3. Verfahren nach Anspruch 1, dadurch gekennzeichnet, daß wenigstens einer der Aufzeichnungspunkte in der Nähe der Antennenanordnung liegt.

4. Verfahren nach Anspruch 1, dadurch gekennzeichnet, daß die Aufzeichnungszeit T gleich einer ganzen Zahl von Perioden des zu analysierenden Signals ist.

5. Verfahren nach Anspruch 1, dadurch gekennzeichnet, daß die Koeffizienten der Fourier-Transformierten der Funktion $(\alpha_k)$ wenigstens einen der folgenden Koeffizienten umfassen:
   - Wert der Gleichstromkomponente;
   - Amplitude und Phase der Grundfrequenz.

6. Verfahren nach Anspruch 1, dadurch gekennzeichnet, daß die Schritte 1 bis 4 mit unterschiedlichen Referenzsignalen durchgeführt werden.

7. Verfahren nach Anspruch 1, das dazu bestimmt ist, die Integrität des Signals zu kontrollieren, das von dem "Glide-Path"-Sender eines ILS-Systems gesendet wird, das eine Anordnung aus drei Antennen $A_1$, $A_2$, $A_3$ aufweist, die ein sogenanntes CSB-Signal, ein sogenanntes SBO-Signal und ein sogenanntes Clearance-Signal aussenden, dadurch gekennzeichnet, daß die Schritte 1 bis 4 durchgeführt werden, indem der Aufzeichnungspunkt ins Innere einer der Antennen und dann nacheinander ins Innere jeder der beiden anderen gelegt wird.

8. Verfahren nach Anspruch 7, dadurch gekennzeichnet, daß die Schritte 1 bis 4 ferner durchgeführt werden, indem der Aufzeichnungspunkt wenigstens einmal in die Nähe der Antennenanordnung gelegt wird.

9. Verfahren nach Anspruch 8, dadurch gekennzeichnet, daß die Schritte 2 bis 5 durchgeführt werden, indem der Aufzeichnungspunkt nacheinander an vier verschiedene Orte in der Nähe der Antennenanlage gelegt wird.

10. Verfahren nach Anspruch 8, dadurch gekennzeichnet, daß die Schritte 1 bis 4 durchgeführt werden, indem der Aufzeichnungspunkt an sechs verschiedene Orte in der Nähe der Antennenanlage gelegt wird.

11. Verfahren nach Anspruch 8, dadurch gekennzeichnet, daß das Referenzsignal das sogenannte CSB-Signal ist, das auf Höhe eines die Antennenanlage speisenden Senders entnommen wird.

12. Verfahren nach Anspruch 7, dadurch gekennzeichnet, daß die Aufzeichnungszeit T 100 Millisekunden beträgt.

13. Verfahren nach Anspruch 7, dadurch gekennzeichnet, daß das im Schritt 2 definierte Filtern auf der Frequenz von 90 Hz durchgeführt wird.

14. Verfahren nach Anspruch 13, dadurch gekennzeichnet, daß das Filtern ferner auf der Frequenz von 150

EP 0 478 424 B1

Hz durchgeführt wird.

15. Verfahren nach Anspruch 7, dadurch gekennzeichnet, daß die im Schritt 3 definierte Zahl n gleich 16 ist.

16. Verfahren nach den Ansprüchen 7 bis 9 und 11 bis 15, dadurch gekennzeichnet, daß zwei Funktionen $S(\alpha_k)$ und $D(\alpha_k)$ erzeugt werden, deren 16 Werte die Summe bzw. die Differenz der Werte sind, die für jeden der Werte von $\alpha_k$ durch das Filtern bei 90 Hz und 150 Hz erhalten wurden, und daß die aus der Fourier-Transformierten jeder dieser beiden Funktionen extrahierten Koeffizienten die Amplitude und die Phase der Komponente mit der Periodizität $2\pi$ sind.

17. Verfahren nach Anspruch 16, dadurch gekennzeichnet, daß die Schritte 1 bis 4 ferner durchgeführt werden, indem das Clearance-Signal als Referenzsignal genommen wird, wobei der Aufzeichnungspunkt nacheinander auf Höhe der Antennen $A_1$ und $A_3$ liegt.

18. Verfahren nach Anspruch 1, das zur Kontrolle der Integrität eines von einer Doppler-VOR-Station gesendeten Signals dient, die eine Antennenanlage umfaßt, die aus einer Zentralantenne und 48 gleichmäßig über einen Kreis verteilten Antennen mit der Zentralantenne als Mittelpunkt besteht, wobei die Zentralantenne durch einen Sender gespeist wird, der eine durch ein Signal mit der Kreisfrequenz $\Omega_o$ amplitudenmodulierte Trägerfrequenz mit der Kreisfrequenz $\omega_o$ erzeugt, wobei die gleichmäßig verteilten Antennen nacheinander paarweise alle sechzigstel Sekunden gespeist werden, wobei die beiden das Paar bildenden Antennen diametral entgegengesetzt sind und die eine der Antennen durch einen Sender gespeist wird, der eine reine Hochfrequenz (HF) mit der Kreisfrequenz $\omega_o + \Omega_1$ erzeugt, und die andere durch einen Sender, der eine reine Hochfrequenz (HF) mit der Kreisfrequenz $\omega_o - \Omega_1$ erzeugt, dadurch gekennzeichnet, daß der Aufzeichnungspunkt in der Nähe der Antennenanlage liegt.

19. Verfahren nach Anspruch 18, dadurch gekennzeichnet, daß die Aufzeichnungszeit T n/30 Sekunden beträgt.

20. Verfahren nach Anspruch 18, dadurch gekennzeichnet, daß die im Lauf einer der Perioden T aufgezeichneten Werte in 48 Zuordnungen aufgeteilt sind, wobei die Zuordnungsänderungen mit den Speisungsänderungen der Paare von gleichmäßig verteilten Antennen synchronisiert sind.

21. Verfahren nach Anspruch 18, dadurch gekennzeichnet, daß die im Schritt 3 definierte Zahl n 16 ist.

22. Verfahren nach Anspruch 18, dadurch gekennzeichnet, daß die Schritte 1 bis 4 wenigstens einmal mit jedem der von den drei Sendern erzeugten Signale als Referenzsignal durchgeführt werden.

23. Verfahren nach Anspruch 22, dadurch gekennzeichnet, daß das im Schritt 2 definierte Filtern an der Gleichstromkomponente und der Komponente $\Omega_1$ durchgeführt wird.

24. Verfahren nach Anspruch 23, dadurch gekennzeichnet, daß die aus der Fourier-Transformierten von $\alpha_k$ extrahierten Koeffizienten wenigstens enthalten:
    - die Gleichstromkomponente;
    - die Komponente mit der Grundfrequenz $\Omega_1$.

25. Verfahren nach den Ansprüchen 18, 19, 20, 21, 23 und 24, dadurch gekennzeichnet, daß man für jede der 48 Antennen der Peripherie 3 Zuordnungen erzeugt, wobei jede der Zuordnungen die n aufgezeichneten Werte mit jedem der Referenzsignale enthält, und daß man aus der mit dem Referenzsignal mit der Kreisfrequenz $\omega_o$ realisierten Zuordnung die Gleichstromkomponente und die Komponente mit der Grundfrequenz der Fourier-Transformierten der Funktion von $\alpha_k$ extrahiert, sowie daß man aus jeder der beiden anderen Zuordnungen die Gleichstromkomponente der Fourier-Transformierten der Funktion von $\alpha_k$ extrahiert.

26. Vorrichtung zur Durchführung der Messung von Parametern einer Sendung, die nicht direkt der Messung zugänglich sind und deren Einfluß auf den Betrag und die Phase der Sendung in einem Punkt mittels eines mathematischen Modells nach dem Verfahren wenigstens eines der Ansprüche 1 bis 25 bestimmt werden kann, wobei die Sendung ausgehend von einer Antennenanordnung realisiert wird, wobei jede Antenne oder Antennengruppe der Anordnung mittels eines oder mehrerer Sender durch eine gemeinsame Hochfrequenzträgerfrequenz (HF) gespeist wird, wobei diese Frequenz für jede der Antennen durch ein oder mehrere reine sinusförmige Niederfrequenzsignale (BF) moduliert wird, dadurch gekennzeichnet, daß die

20

Vorrichtung aufweist:
- wenigstens einen Sensor (2), der in der Nähe der Antennenanlage angeordnet ist;
- einen Summierer (3) mit zwei Eingängen (4, 5) und einem Ausgang (6), der an einem seiner Eingänge (5) über einen ersten programmierbaren Hochfrequenzumschalter (HF) (7), der nacheinander den Anschluß jedes der Sensoren (2) ermöglicht, eines der Signale von einem Sensor empfängt und an dem anderen Eingang (4) über einen programmierbaren Phasenschieber (8) ein sogenanntes Referenzsignal empfängt, das über einen Koppler (9) am Ausgang eines der bei der Sendung mitwirkenden Sender abgenommen wird, wobei der Ausgang des Summierers mit einem Detektor (10) verbunden ist;
- einen Rechner (11), der das Ausgangssignal (16) des Detektors (10) empfängt und mittels eines Busses (17) Steuersignale in Richtung zum Phasenschieber und in Richtung zum Hochfrequenzumschalter schickt, und der so programmiert ist, daß er wenigstens die Schritte 4 bis 6 nach Anspruch 1 durchführt.

27. Vorrichtung nach Anspruch 26, dadurch gekennzeichnet, daß der Ausgang (16) des Detektors (10) am Eingang mehrerer Analogfilter (14) liegt, wobei der Ausgang jedes der Filter (14) einen zweiten programmierbaren Umschalter (15) speist, dessen Ausgang die Erfassungskarte (12) speist.

28. Vorrichtung nach Anspruch 26, dadurch gekennzeichnet, daß ein programmierbares Dämpfungsglied (18) zwischen den Ausgang des ersten Umschalters (7) und den Eingang des Summierers (3) geschaltet ist.

29. Vorrichtung nach Anspruch 28, dadurch gekennzeichnet, daß ein Diodenschalter (19) zwischen den Ausgang des Phasenschiebers (8) und den Eingang (4) des Summierers (3) eingefügt ist.

30. Vorrichtung nach Anspruch 29, dadurch gekennzeichnet, daß der Eingang des Umschalters (7) ferner mit drei Kopplern ($1_1$, $1_2$, $1_3$) und einer Last (20) verbunden ist.

31. Vorrichtung nach Anspruch 30, dadurch gekennzeichnet, daß sie einen dritten programmierbaren Umschalter (22) aufweist, dessen Ausgang mit dem Eingang des Phasenschiebers (8) und dessen Eingänge mit wenigstens zwei Kopplern ($9_1$, $9_2$) verbunden sind.

32. Vorrichtung nach den Ansprüchen 27 und 31, dadurch gekennzeichnet, daß die Erfassungskarte (12) durch ein Synchronisierungsorgan (21) gespeist wird.

33. Vorrichtung nach einem der Ansprüche 26 bis 32, dadurch gekennzeichnet, daß der Summierer (3) und der Detektor (10) durch eine Mischstufe (23) ersetzt sind, die an einem ihrer Eingänge (5) das Ausgangssignal des Dämpfungsgliedes (18) und an dem anderen Eingang (4) das Ausgangssignal des Phasenschiebers (8) empfängt, und daß eine Anpaßschaltung (24) am Eingang das Signal von der Mischstufe (23) empfängt und am Ausgang die Erfassungskarte (12) speist.

## Claims

1. Process for permanent monitoring of the integrity of a transmission liable to be affected by parameters which are not directly accessible to measurement and for which it is known how, by means of a mathematical model, to determine the influence on the modulus and phase of the field radiated into space, the transmission being carried out from an antenna array, each antenna or group of antennas of the array being fed with one or more high-frequency (H.F.) carrier frequencies, each of these frequencies being modulated in a known manner by one or more pure low-frequency sinusoidal signals, characterized by the following steps:

1) there are recorded, at at least one point and for a time T, the value of the amplitude of the combination of the signal received at this point and of a so-called reference signal whose fundamental frequency is equal to one of the high frequencies (H.F.) of the signal to be analysed;

2) the amplitude of the low-frequency (L.F.) components of the signal thus obtained is extracted and they are stored;

3) steps 1 and 2 are recommenced n times (n denoting an integer), recording the signal at the same point and phase-shifting the reference signal each time by a quantity $\alpha_k = \dfrac{2\pi}{n}$, k being an integer taking all the values between 1 and n successively;

21

4) the n amplitudes thus stored are treated as the n values of a function F ($\alpha_k$) from which are extracted the values of the amplitudes and arguments of certain terms in its Fourier transform;

5) the set of operations 1 to 4 is recommenced at least as many times as there are measurement points;

6) the values of the said parameters which are not directly measurable are determined from the said values of amplitudes and arguments by use of the said mathematical model.

2. Process according to Claim 1, characterized in that at least one of the recording points lies inside the radome of an antenna, the recorded signal being representative of the current supplying this antenna.

3. Process according to Claim 1, characterized in that at least one of the recording points lies in proximity to the antenna array.

4. Process according to Claim 1, characterized in that the recording time T is equal to an integer number of periods of the signal to be analysed.

5. Process according to Claim 1, characterized in that the coefficients of the Fourier transform of the function F($\alpha_k$) include at least one of the following coefficients:
   - the value of the DC component;
   - the amplitude and phase of the fundamental frequency.

6. Process according to Claim 1, characterized in that steps 1 to 4 are performed with different reference signals.

7. Process according to Claim 1 and intended for monitoring the intensity of the signal transmitted by the "Glide path" transmitter of an ILS system which includes an array consisting of three antennas $A_1$ $A_2$ $A_3$ transmitting a so-called CSB signal, a so-called SBO signal and a so-called clearance signal, characterized in that steps 1 to 4 are performed while siting the recording point inside one of the antennas then inside each of the other two successively.

8. Process according to Claim 7, characterized in that steps 1 to 4 are furthermore performed while siting the recording point in proximity to the antenna array at least once.

9. Process according to Claim 8, characterized in that steps 2 to 5 are performed while siting the recording point in proximity to the antenna array at four different spots successively.

10. Process according to Claim 8, characterized in that steps 1 to 4 are performed while siting the recording point in proximity to the antenna array at six different spots.

11. Process according to Claim 8, characterized in that the reference signal is the so-called CSB signal logged at the level of a transmitter feeding the antenna array.

12. Process according to Claim 7, characterized in that the recording time T is 100 milliseconds.

13. Process according to Claim 7, characterized in that the filtering defined in step two is performed on the 90 Hz frequency.

14. Process according to Claim 13, characterized in that filtering is furthermore performed on the 150 Hz frequency.

15. Process according to Claim 7, characterized in that the number n defined in step 3 is equal to 16.

16. Process according to Claims 7 to 9 and 11 to 15, characterized in that two functions S($\alpha_k$) and D($\alpha_k$) are created, the 16 values of which are respectively the sum and difference of the values obtained for each of the values of $\alpha_k$ by filtering at 90 Hz and 150 Hz and that the coefficients extracted from the Fourier transform of each of these two functions are the amplitude and phase of the component with $2\pi$ periodicity.

17. Process according to Claim 16, characterized in that steps 1 to 4 are furthermore performed taking the clearance signal as reference signal the recording point being sited at antennas $A_1$ and $A_3$ successively.

18. Process according to Claim 1 and intended for monitoring the integrity of the signal transmitted by a Dop-

EP 0 478 424 B1

pler VOR station which includes an antenna array consisting of a central antenna and 48 antennas equally distributed around a circle whose centre is the central antenna, the central antenna being fed by a transmitter producing a carrier frequency of angular frequency $\omega_o$ amplitude-modulated by a signal of angular frequency $\Omega_o$, the equally distributed antennas being fed successively pairwise every 1/60th of a second, the two antennas constituting the pair being diametrically opposite one of the antennas being fed by a transmitter producing a pure high frequency (HF) with angular frequency $\omega_o + \Omega_1$ and the other by a transmitter producing a pure high frequency (HF) of angular frequency $\omega_o - \Omega_1$, characterized in that the recording point is situated in proximity to the antenna array.

19. Process according to Claim 18, characterized in that the recording time T is n/30th of a second.

20. Process according to Claim 18, characterized in that the values recorded during one of the periods T are distributed into 48 consignments, the changes of consignment being synchronized with the changes of feed of the pairs of equally distributed antennas.

21. Process according to Claim 18, characterized in that the number n defined in step 3 is 16.

22. Process according to Claim 18, characterized in that steps 1 to 4 are performed at least once with each of the signals produced by the three transmitters as reference signal.

23. Process according to Claim 22, characterized in that the filtering defined in step 2 is performed on the DC component and the $\Omega_1$ component.

24. Process according to Claim 23, characterized in that the coefficients extracted from the Fourier transform of $F(\alpha_k)$ include at least:
   - the DC component;
   - the component at the fundamental $\Omega_1$.

25. Process according to Claims 18, 19, 20, 21, 23 and 24, characterized in that, for each of the 48 antennas of the periphery 3 consignments are created, each of the consignments containing the n values recorded with each of the reference signals and in that the DC component and the component at the fundamental frequency of the Fourier transform of the function of $\alpha_k$ are extracted from the consignment formed with the reference signal at the angular frequency $\omega_o$ and in that the DC component of the Fourier transform of the function of $\alpha_k$ is extracted from each of the other two consignments.

26. Device for performing the measurement of parameters of a transmission which is not directly accessible to measurement for which it is known how, by means of a mathematical model, to determine the influence on the modulus and phase of the transmission at a point according to the process of at least one of Claims 1 to 25, the transmission being carried out from an antenna array, each antenna or group of antennas of the array being fed by means of one or more transmitters with a common high-frequency (HF) carrier frequency, this frequency being, for each of the antennas, modulated by one or more pure low-frequency (LF) sinusoidal signals, characterized in that the device comprises:
   - at least one sensor (2) sited in proximity to the antenna array;
   - a summing unit (3) including two inputs (4, 5) and one output (6) and receiving on one of its inputs (5) by way of a first high-frequency (HF) programmable switch (7) allowing the successive linking of each of the sensors (2), one of the signals originating from a sensor and on the other input (4) by way of a programmable phase controller (8) a so-called reference signal picked up by way of a coupler (9) at the output of one of the transmitters involved in the transmission, the output of the summing unit being linked to a detector (10);
   - a computer (11) receiving the signal at the output (16) of the detector (10) and sending control signals towards the phase controller and towards the high-frequency switch by means of a bus (17), and programmed to perform at least steps 4 to 6 according to Claim 1.

27. Device according to Claim 26, characterized in that the output (16) of the detector (10) is applied to the input of a plurality of analogue filters (14) the output from each of the filters (14) feeding a second programmable switch (15) whose output feeds the aquisition board (12).

28. Device according to Claim 26, characterized in that a programmable attenuator (18) is connected between the output of the first switch (7) and the input of the summing unit (3).

23

29. Device according to Claim 28, characterized in that a diode-based interrupt switch (19) is inserted between the output of the phase controller (8) and the input (4) of the summing unit (3).

30. Device according to Claim 29, characterized in that the input of the switch (7) is furthermore linked up to three couplers $(1_1, 1_2, 1_3)$ and a load (20).

31. Device according to Claim 30, characterized in that it includes a third programmable switch (22) whose output is linked to the input of the phase controller (8) and whose inputs are linked to at least two couplers $(9_1, 9_2)$.

32. Device according to Claims 27 and 31, characterized in that the acquisition board (12) is fed by a synchronization module (21).

33. Device according to one of Claims 26 to 32, characterized in that the summing unit (3) and the detector (10) are replaced by a mixer (23) receiving on one of its inputs (5) the signal at the output of the attenuator (18) and on the other input (4) the signal at the output of the phase controller (8), and a matching circuit (24) receiving at input the signal originating from the mixer (23) and feeding at output the acquisition board (12).

FIG.1a

FIG.1b

FIG.2

FIG.3

FIG.4

**FIG.5**

FIG. 6